(19) Europäisches Patentamt
European Patent Office
Office européen des brevets

(11) **EP 1 192 215 B1**

(12) **FASCICULE DE BREVET EUROPEEN**

(45) Date de publication et mention de la délivrance du brevet:
**09.11.2005 Bulletin 2005/45**

(21) Numéro de dépôt: **00949531.8**

(22) Date de dépôt: **13.06.2000**

(51) Int Cl.[7]: **C08L 1/02**, C08L 5/00, C08L 5/08

(86) Numéro de dépôt international:
**PCT/FR2000/001628**

(87) Numéro de publication internationale:
**WO 2000/077088 (21.12.2000 Gazette 2000/51)**

(54) **DISPERSION DE MICROFIBRILLES ET/OU DE MICROCRISTAUX, NOTAMMENT DE CELLULOSE, DANS UN SOLVANT ORGANIQUE**

DISPERSION VON MIKROFIBRILLEN UND/ODER VON MIKROKRISTALLEN, INSBESONDERE VON ZELLULOSE, IN EINEM ORGANISCHEN LÖSUNGSMITTEL

MICROFIBRILLATED AND/OR MICROCRYSTALLINE DISPERSION, IN PARTICULAR OF CELLULOSE, IN AN ORGANIC SOLVENT

(84) Etats contractants désignés:
**DE ES GB IT**

(30) Priorité: **14.06.1999 FR 9907493**

(43) Date de publication de la demande:
**03.04.2002 Bulletin 2002/14**

(73) Titulaire: **CENTRE NATIONAL DE LA RECHERCHE SCIENTIFIQUE (CNRS)**
**75794 Paris Cedex 16 (FR)**

(72) Inventeurs:
- **HEUX, Laurent**
  **F-38410 Saint-Martin d'Uriage (FR)**
- **BONINI, Céline**
  **F-38000 Grenoble (FR)**

(74) Mandataire: **Grosset-Fournier, Chantal Catherine**
**Grosset-Fournier & Demachy,**
**54, rue Saint-Lazare**
**75009 Paris (FR)**

(56) Documents cités:
**EP-A- 0 120 471** **WO-A-96/22080**
**WO-A-96/22696** **US-A- 5 769 934**

- **STANKA KRATOHVIL ET AL.: "Coagulation of Mycrocrystalline Cellulose Dispersions" JOURNAL OF COLLOID AND INTERFACE SCIENCE, vol. 29, no. 2, 1969, pages 187-193, XP000874842**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 192 215 B1

Printed by Jouve, 75001 PARIS (FR)

## Description

La présente invention a pour objet une dispersion de microfibrilles et/ou de microcristaux, notamment de cellulose, dans un solvant organique.

La cellulose native se présente sous forme de microcristaux et/ou de microfibrilles très allongés, souvent organisés en fibres. On peut trouver cette cellulose dans les plantes, mais également dans certains champignons, bactéries, amibes et même certains animaux marins.

L'hydrolyse acide en milieu aqueux de la cellulose conduit à des suspensions colloïdales aqueuses stables de microcristaux individuels [1].

Le traitement par homogénéisateur de parois primaires ou secondaires de végétaux permet également d'obtenir des suspensions aqueuses stables de microfibrilles et/ou de microcristaux de cellulose plus ou moins individualisés. La description de l'obtention de ces suspensions de cellulose dans l'eau a fait l'objet de nombreux brevets [2, 3].

Plus particulièrement, on parle de microcristaux lorsqu'il s'agit de cristallites individuels issus de l'hydrolyse acide et, de microfibrilles lors d'un traitement d'homogénéisation de parois primaires ou secondaires de végétaux. Dans les deux cas, il s'agit de cristaux de cellulose allongés dans lesquels les chaînes macromoléculaires sont alignées suivant le grand axe du cristal.

Suivant l'origine de la cellulose, les tailles latérales des microcristaux et/ou des microfibrilles peuvent varier de 2 nm à 50 nm. Les longueurs desdits microcristaux et/ou microfibrilles peuvent très largement dépasser le micron.

Suivant l'origine de la cellulose (par exemple le coton) et les concentrations utilisées (par exemple des concentrations élevées, variant entre 2 et 10% p/p), les dispersions colloïdales stables de cellulose dans l'eau s'organisent sous forme de cristal liquide de type cholestérique [4], dont le pas peut varier de 80 à 10 µm, suivant les conditions opératoires utilisées [5].

Dans le cas de la cellulose microfibrillée (parenchyme de betterave par exemple), on n'observe pas de mésophase (organisation en cristal liquide), mais la formation de gels présentant de très bonnes propriétés rhéologiques [6]. Les gammes de concentrations pour lesquelles une suspension de microfibrilles et/ou de microcristaux devient un gel, sont variables suivant l'origine et le traitement de purification, mais sont de l'ordre du pour-cent en matière sèche.

Les domaines d'applications des microcristaux et/ou microfibrilles de cellulose sont très variés. Ainsi, on pourra notamment citer les domaines d'applications ci-dessous.

- Fabrication de matériaux composites : la plupart des polymères synthétiques ne sont solubles que dans des solvants organiques ; ainsi, l'application des microcristaux et/ou microfibrilles de cellulose est limitée aux latex [7] ou aux résines hydrosolubles [26], et par exemple à l'acétate de cellulose dans le cas des microcristaux à surface modifiée [15].
- Epaississant : de même que pour les matériaux composites, les applications épaississantes se limitent aux milieux aqueux ; ainsi, on pourra citer l'utilisation des microfibrilles et/ou microcristaux de cellulose pour la fabrication de fluide de forage pétrolier (boues pétrolières) [9] ou, pour améliorer des produits agro-alimentaire [12].

On pourra également citer l'utilisation des microcristaux et/ou microfibrilles de cellulose pour la fabrication de papiers à propriétés optiques variables [8], pour la préparation de compositions cosmétiques ou dermatologiques [10], pour la fabrication de formulations détarnantes [11], dans le domaine de la pharmacie, para-pharmacie et de l'agroalimentaire[13].

L'ensemble des propriétés et des applications des microcristaux et/ou des microfibrilles de cellulose présentées ci-dessus, sont dues au très grand facteur de forme de ces objets (c'est-à-dire que le rapport longueur sur largeur est élevé, typiquement supérieur à 10), et à leur bonne dispersion dans le milieu d'utilisation.

Cependant, les dispersions de microfibrilles et/ou de microcristaux de cellulose ne pouvaient être obtenues jusqu'à présent que dans l'eau ou dans des solvants très polaires (glycérine, éthylène glycol, DMSO...) [14].

En effet, lorsque l'on cherche à disperser des microcristaux et/ou des microfibrilles de cellulose dans des solvants organiques, notamment apolaires (toluène, cyclohexane...) ou faiblement polaires, on obtient une floculation très rapide de la cellulose, jusqu'à obtenir des agrégats de très grande taille sédimentant dans le solvant. L'agrégation provient notamment du caractère hydrophile de la cellulose, qui favorise les interactions entre microcristaux et/ou entre microfibrilles par liaisons hydrogène et défavorise les interactions avec le solvant.

L'une des approches possibles pour rendre compatibles les microcristaux et/ou les microfibrilles de cellulose avec un solvant organique, est de modifier chimiquement la surface de la cellulose en la rendant hydrophobe afin de la rendre compatible avec le milieu dans lequel on veut la transférer.

Cependant, cette technique de modification chimique est délicate à mettre en oeuvre. En effet, dans la mesure où l'on veut modifier uniquement la surface de la cellulose pour garder intacte à la fois la structure, le caractère cristallin et l'état de dispersion, il est nécessaire d'effectuer la modification chimique de façon contrôlée. Ainsi, on a pu obtenir des microfibrilles de cellulose à surface modifiée dont 25% au moins des fonctions hydroxyles présentes à la surface

de la microfibrille sont estérifiées par l'acide acétique [15]. Cette modification de surface de la cellulose par acétylation ne permet *a priori* que la dispersion dans des milieux assez polaires, et dans le cas cité, ne permet que la dispersion des microcristaux de cellulose acétylée dans de l'acétate de cellulose, pour obtenir des matériaux composites.

Ainsi, les voies de modification chimique, encore peu développées et délicates sur ce genre de substrat, ne permettent pas, en l'état actuel des choses, de disperser la cellulose dans des solvants organiques, et notamment les solvants organiques apolaires ou faiblement polaires.

Par ailleurs, les dispersions stables de microcristaux et/ou de microfibrilles de cellulose en phase aqueuse sont de nature telle, qu'une fois séchée, lesdits microcristaux de cellulose provenant de ces dispersions ne peuvent plus former de redispersion du fait du caractère irréversible de la formation de liaisons hydrogène entre les microcristaux et/ou les microfibrilles.

Plusieurs brevets ont trait à la modification de surface [17] de ces microcristaux et/ou microfibrilles de cellulose ou à l'ajout d'un additif [18, 19]. Plus particulièrement, lesdits brevets [17, 18 et 19] ont pour objet des préparations de microfibrilles et/ou de microcristaux de cellulose pouvant être redispersées dans de l'eau après séchage. Cependant, les préparations de microfibrilles et/ou de microcristaux de cellulose décrites dans lesdits brevets [17, 18 et 19] ne peuvent pas être redispersées dans des solvants organiques.

La chitine se présente également sous forme de microcristaux et/ou de microfibrilles.

La chitine est un polymère de structure rencontré dans la carapace des insectes, des crustacés, et certains champignons et microorganismes, dont la structure chimique est celle d'un polysaccharide composé de N-acétyl-D-glucosamine liés en $\beta$ 1$\rightarrow$4.

De même que pour la cellulose, l'hydrolyse acide en milieu aqueux de la chitine conduit à des suspensions colloïdales aqueuses stables de microcristaux individuels [1].

Les cristallites de chitine, tout comme ceux de cellulose, peuvent également s'organiser sous forme de cristal liquide de type cholestérique [22].

Sous sa forme microcristalline, ledit polysaccharide a essentiellement fait l'objet de publications universitaires [1, 22]. De plus, il existe un brevet [23] décrivant la préparation de poudre de chitine à l'aide d'acide phosphorique.

Pour ce qui est de l'obtention et du traitement des dispersions aqueuses de microcristaux et/ou de microfibrilles de chitine, la seule différence avec les dispersions aqueuses de microcristaux et/ou microfibrilles de cellulose, est que la stabilisation colloïdale est due à une déacétylation partielle en surface de la chitine en chitosane. La présence de groupements $NH_3^+$ assure la non floculation.

Cependant, à ce jour, seules des dispersions aqueuses de chitine peuvent être obtenues, ou dans des solvants très polaires (glycérine, éthylèneglycol, DMSO etc...).

Les polysaccharides tels que le $\beta$ 1$\rightarrow$3 glucane, le $\beta$ 1$\rightarrow$3 xylane et le $\beta$ 1$\rightarrow$4 mannane, ont en commun une structure fibrillaire semblable à celle de la cellulose ou de la chitine. Ainsi, lesdits polysaccharides se présentent également sous forme de microcristaux et/ou microfibrilles [24, 25].

Cependant, à ce jour, seules des dispersions aqueuses de polysaccharides tels que le $\beta$ 1$\rightarrow$3 glucane, le $\beta$ 1$\rightarrow$3 xylane et le $\beta$ 1$\rightarrow$4 mannane peuvent être obtenues.

La demande internationale WO 96/22696 décrit un "composite" constitué de cellulose, notamment de la cellulose microcristalline, et d'un ou plusieurs tensioactifs, ledit tensioactif étant adsorbé sur la surface de la cellulose. Le composite ainsi obtenu présente une taille d'environ 1 à environ 505 microns et le procédé d'obtention de ce composite consiste en un co-traitement de la cellulose et du tensioactif.

La demande internationale WO 96/22080 concerne notamment un agglomérat constitué de cellulose microcristalline et de tensioactif, de préférence anionique, la cellulose microcristalline et le tensioactif étant en association intime l'un avec l'autre, ainsi que l'utilisation dudit aggloméraat comme excipient pour la préparation de médicaments. Plus particulièrement, ce document décrit la préparation d'un aggloméraat de cellulose microcristalline et de sulfate de lauryl sodium (tensioactif), par mélange de la cellulose microcristalline avec de l'eau. Le mélange ainsi obtenu est ensuite combiné avec le sulfate de lauryl sodium, puis séché par atomisation. Les particules de l'aggloméraat obtenu à l'issue du procédé présentent une taille moyenne d'environ 40 à 60 microns.

Le brevet américain US 5,769,934 concerne un procédé de préparation de cellulose microcristalline colloïdale (dont la taille des particules est inférieure à environ 1 micron), consistant notamment à soumettre de la cellulose à un traitement d'explosion à la vapeur. Il est notamment décrit dans ce brevet que la cellulose microcristalline peut être mise à réagir avec un composé hydrophile, tel que la carboxyméthylcellulose.

L'un des buts de la présente invention est de fournir des suspensions ou dispersions de microfibrilles et/ou de microcristaux, notamment de cellulose ou de toute autre substance organique fibrillaire, dans les solvants organiques pour lesquels lesdites suspensions ou dispersions étaient jusqu'à ce jour impossibles à réaliser.

Un autre but de la présente invention est de fournir des suspensions ou dispersions de microfibrilles et/ou microcristaux de cellulose, stables, dans des solvants organiques, notamment apolaires ou faiblement polaires, sans modification chimique de la cellulose.

Un autre but de la présente invention est de fournir des dispersions ou suspensions aqueuses de microcristaux

et/ou microfibrilles, notamment de cellulose, qui une fois séchées, pourront être redispersées dans l'eau ou dans un solvant organique, tout en conservant leurs propriétés liées à la dispersion.

La présente invention a pour objet une dispersion colloïdale, dans un solvant organique, de microfibrilles et/ou de microcristaux d'une substance organique fibrillaire choisie dans le groupe constitué par la cellulose, la chitine, les polysaccharides tels que le β 1→3 glucane, le β 1→3 xylane et le β 1→4 mannane, contenant en outre au moins un composé possédant une partie hydrophile et une partie hydrophobe.

La présente invention concerne, de façon générale, toute substance organique fibrillaire se présentant sous forme dé microcristaux et/ou de microfibrilles formant, dans un solvant organique et en dehors du cadre de l'invention, une floculation rapide, jusqu'à l'obtention d'agrégats de grande taille sédimentant dans le solvant organique.

Or on a constaté selon l'invention, que la présence d'un composé possédant une partie hydrophile et une partie hydrophobe permettait d'obtenir des dispersions non-floculantes de microcristaux et/ou de microfibrilles desdites substances organiques dans des solvants organiques.

L'expression « dispersion colloïdale » signifie une dispersion de particules solides dans un milieu liquide, les particules ayant des tailles caractéristiques variant d'environ 1 nm à 1000 nm.

Dans ce qui suit, l'expression « dispersion colloïdale » a la même signification que l'expression « suspension colloïdale ».

L'expression « microfibrille » signifie qu'il s'agit d'un élément extrêmement long et fin constitué de chaînes macromoléculaires alignées dans le sens de la fibre. Lesdites microfibrilles sont en forme de filaments.

A titre d'exemple, dans le cas des polysaccharides, ledit élément présente un diamètre variant de 2 à 50 nm et une longueur supérieure à 1 μm.

L'expression « microcristaux » signifie qu'il s'agit de cristaux de taille microscopique constitués de chaînes macromoléculaires orientées dans le sens de la fibre.

Dans le cas des polysaccharides, les microcristaux ont des diamètres variant de 2 à 50 nm pour des longueurs de l'ordre du micron, et se présentent sous forme de bâtonnets.

La différence essentielle entre les microfibrilles et/ou les microcristaux est que ces derniers ont une taille finie (généralement inférieure à 1 μm) alors que les microfibrilles peuvent être très longues.

Les microfibrilles et/ou microcristaux de cellulose selon l'invention peuvent être d'origine quelconque, par exemple d'origine végétale, bactérienne, animale, fongique ou amibienne.

Comme exemple de sources animales de cellulose, on peut citer les animaux de la famille des tuniciers.

Des exemples de sources végétales de cellulose peuvent être le bois, le coton, le lin, la ramie, certaines algues, le jute, les déchets des industries agro-alimentaire ou analogues.

Les microfibrilles et/ou microcristaux de chitine peuvent être d'origine animale ou fongique.

Comme exemple de source animale, on peut citer les crustacés (crabes, crevettes, homards etc..), certains insectes (hannetons, scarabées etc...)

Comme exemple de source fongique de la chitine, on peut citer les champignons et les levures.

Les microfibrilles et/ou microcristaux de polysaccharides, tels que le β 1→3 glucane, le β 1→3 xylane et le β 1→4 mannane, peuvent être d'origine végétale ou fongique.

Comme exemple de source végétale, on peut notamment citer, pour le β 1→3 xylane, certaines algues [24]. Pour le β 1→4 mannane on peut également citer certaines algues, ainsi que l'endosperme de graines de plantes terrestres [25].

Comme exemple de source fongique des polysaccharides, on peut notamment citer, pour le β 1→3 glucane, certains champignons et certaines levures [24].

L'obtention de microfibrilles et/ou de microcristaux de polysaccharides, tels que le β 1→3 glucane, le β 1→3 xylane et le β 1→4 mannane, à partir d'éléments naturels dépend du mode de traitement et de purification.

Une dispersion colloïdale avantageuse de l'invention est caractérisée en ce que le composé possédant une partie hydrophile et une partie hydrophobe est choisi dans le groupe constitué par un tensioactif, un polymère stabilisateur, un cotensioactif ou leurs mélanges, et notamment un mélange de tensioactif et de cotensioactif.

Lorsque le composé possédant une partie hydrophile et une partie hydrophobe est un tensioactif et/ou un polymère stabilisateur, ledit composé peut être utilisé seul, ou en mélange avec un cotensioactif.

Lorsque le composé possédant une partie hydrophile et une partie hydrophobe est un cotensioactif, ce dernier est toujours utilisé avec un tensioactif et/ou un polymère stabilisateur.

Selon l'invention, l'expression « polymère stabilisateur» englobe également l'expression « copolymère stabilisateur ».

Selon un mode de réalisation avantageux, l'invention concerne une dispersion colloïdale telle que définie ci-dessus dans un solvant organique de microfibrilles et/ou de microcristaux de cellulose.

Selon un autre mode de réalisation avantageux, la dispersion colloïdale est caractérisée en ce que le solvant organique présente une constante diélectrique inférieure ou égale à environ 37,5, et/ou en ce que le solvant organique est choisi dans le groupe constitué par

- les hydrocarbures aliphatiques ayant d'environ 5 à environ 20 atomes de carbones, notamment le pentane, l'hexane, l'heptane, l'octane, le dodécane ou le cyclohexane,
- les hydrocarbures aromatiques, notamment le xylène, le toluène ou la décaline,
- les solvants chlorés, notamment le chloroforme, le dichlorométhane, le tétrachlorure de carbone, le dichloroéthane,
- les cétones ayant d'environ 3 à environ 10 atomes de carbone, notamment l'acétone ou la méthyléthylcétone,
- les composés vinyliques susceptibles d'être polymérisés, notamment les méthacrylates et les acrylates d'alkyles ayant d'environ 1 à environ 10 atomes de carbones, le styrène, l'acétate de vinyle,
- les époxydes, notamment ceux présentant une chaîne aliphatique ayant d'environ 1 à environ 10 atomes de carbones, et/ou une chaîne aromatique, les diépoxydes, les triépoxydes et/ou les tétraépoxydes,
- les amines primaires, secondaires ou tertiaires, notamment celles comportant une chaîne aliphatique ayant d'environ 1 à environ 10 atomes de carbone et/ou une chaîne aromatique, les diamines, triamines ou tétramines,
- les acétates d'alkyles ayant d'environ 1 à environ 10 atomes de carbone, notamment les acétates de méthyle, d'éthyle, de propyle ou de butyle,
- les éthers comportant une chaîne alkyle ayant d'environ 1 à environ 20 atomes de carbones ou une chaîne aromatique tels que l'éther éthylique, ou l'éther benzylique,
- les aldéhydes, les acides carboxyliques et/ou leurs dérivés acylés et anhydrides, les polyacides, comportant une chaîne alkyle ayant d'environ 1 à environ 20 atomes de carbones ou une chaîne aromatique tels que l'acétaldéhyde, l'acide acétique, l'anhydride maléique, le benzaldéhyde,
- les alcools primaires, secondaires ou tertiaires, notamment ceux comportant une chaîne aliphatique ayant d'environ 1 à environ 10 atomes de carbone, et/ou une chaîne aromatique, les polyalcools, notamment le méthanol, l'éthanol, l'isopropanol, le butanol

ou l'alcool benzylique,

- le tétrahydrofuranne (THF), la pyridine, le diméthylformamide (DMF), le diméthylacétamide (DMAc),
- les huiles minérales et/ou organiques, d'origine synthétique ou naturelle, telles que les huiles silicones ou les huiles végétales,

ou leurs mélanges.

La constante diélectrique d'un solvant permet de mesurer la polarité de ce dernier. Parmi les solvants organiques présentant une constante diélectrique inférieure ou égale à environ 37,5, on peut notamment citer ceux choisis dans le groupe constitué par le dioxanne, le benzène, le sulfure de carbone, le diméthoxyméthane, la diéthylamine, l'oxyde de phényle, la pipéridine, le diméthoxy-1, 2 éthane, la quinoléine, le phénol, l'ammoniaque liquide, l'hexaméthylphosphorotriamide (HMPT), le diéthylèneglycol, la N-méthyl-pyrrolidone, le nitrornéthane ou l'acétonitrile.

Selon un mode de réalisation avantageux, le solvant organique est, selon l'invention, choisi dans le groupe constitué par les solvants organiques apolaires ou très faiblement polaires, dont la constante diélectrique est inférieure ou égale à environ 12,4, tels que le tétrahydrofuranne (THF), la pyridine, l'éther éthylique, l'acétate d'éthyle, le cyclohexane, le toluène, l'acide acétique, le dichlorométhane ou le tétrachlorure de carbone.

Selon un autre mode de réalisation avantageux, le solvant organique est, selon l'invention, choisi dans le groupe constitué par les solvants plus polaires, dont la constante diélectrique est supérieure ou égale à 20,7, tels que l'acétone, le méthanol, l'éthanol ou le diméthylformamide (DMF).

Comme exemples d'époxydes, de diépoxydes, de triépoxydes ou tétraépoxydes, on peut notamment citer ceux susceptibles d'être utilisés pour la fabrication de réseaux époxydes, tels que le diépoxyde Diglycidyl Ether de Bisphénol A.

Comme exemples de diamines, triamines ou tétramines, on peut notamment citer celles susceptibles d'être utilisées comme durcisseur dans la fabrication de réseaux époxydes, telles que la diamine DiaminoDiphénylMéthane (DDM).

Les solvants organiques énumérés ci-dessous, sont uniquement donnés à titre d'exemples, et ne limitent en aucun cas la présente invention. Ainsi, de façon générale, tout solvant organique servant à la synthèse organique, ou susceptible d'être polymérisé, polycondensé ou de servir comme précurseur de résines thermodurcissables, fait partie de l'invention.

Selon un mode de réalisation avantageux, dans la dispersion colloïdale de l'invention, la quantité de cellulose varie d'environ 0,01% à environ 50% en poids, par rapport au poids total de la dispersion.

Selon un mode de réalisation avantageux, dans la dispersion colloïdale de l'invention, le composé possédant une partie hydrophile et une partie hydrophobe est :

(a) un tensioactif possédant :

- une partie hydrophile, susceptible de s'adsorber sur les microfibrilles et/ou microcristaux de la substance organique fibrillaire choisie dans le groupe constitué par la cellulose, la chitine, les polysaccharides tels que le β 1→ 3 glucane, le β 1→ 3 xylane et le β 1→ 4 mannane, et contenant par exemple des groupements oxyéthylène,
- une partie hydrophobe, contenant par exemple une chaîne carbonée ayant au moins 6 atomes de carbone, aromatique ou non, et susceptible d'interagir avec le solvant,

  ledit tensioactif étant notamment choisi dans le groupe constitué par

  * les tensioactifs cationiques, par exemple de la famille des alkyles d'ammonium quaternaires contenant d'environ 1 à environ 2 substituants alkyles, ayant d'environ 6 à environ 20 atomes de carbones, tel que le bromure de didécylediméthyle ammonium,
  * les tensioactifs anioniques, par exemple de la famille des esters phosphoriques d'alkylarylphénol polyoxyakylénés, dont le substituant alkyle contient d'environ 1 à environ 12 atomes de carbone, et d'environ 5 à environ 25 motifs oxyalkylène ayant d'environ 1 à environ 4 atomes de carbone, et notamment des motifs oxyéthylène, oxypropylène, oxybutylène, par exemple le BNA, mélange d'ester et de diester d'acide phosphorique à chaîne alkylaryle, dont le substituant alkyle contient 9 atomes de carbone et 9 motifs oxyéthylène,
  * les tensioactifs amphotères possédant un groupement ammonium quaternaire et un groupement anionique phosphorique, par exemple de la famille des phospholipides, tels que la lécithine de soja ou d'oeuf,
  * les tensioactifs neutres, par exemple de la famille de ceux comprenant un motif sorbitol, et une à environ 3 chaînes polyoxyéthylène, une à environ 3 chaînes grasses ayant d'environ 12 à environ 30 atomes de carbone, et notamment de 18 atomes de carbone, tel que le polyoxyéthylène (20) sorbitane trioléate,

(b) ou, un polymère stabilisateur possédant d'environ 5 à environ 200 unités hydrophiles et d'environ 10 à environ 200 unités hydrophobes, notamment ceux possédant une masse moléculaire inférieure à 20000, tels que les copolymères blocs oxyde d'éthylène-oxyde de propylène.

L'expression « partie hydrophobe susceptible d'interagir avec le solvant » signifie que ladite partie est compatible chimiquement avec le solvant, au sens des paramètres de solubilité. Ainsi, deux composés sont compatibles chimiquement, lorsque leur paramètre de solubilité sont suffisamment proches, c'est-à-dire que la différence entre lesdits paramètres de solubilité, exprimée en $(calories/cm^3)^{1/2}$, est inférieure ou égale à 3.

Selon un autre mode de réalisation avantageux, la dispersion colloïdale de l'invention contient, outre le tensioactif, un cotensioactif possédant :

- une partie hydrophile compatible avec la partie hydrophile du composé possédant une partie hydrophile et une partie hydrophobe tel que défini ci-dessus, et notamment avec la partie hydrophile du tensioactif ou du polymère stabilisateur tel que défini ci-dessus,
- une partie hydrophobe compatible avec la partie hydrophobe du composé possédant une partie hydrophile et une partie hydrophobe tel que défini ci-dessus, et notamment avec la partie hydrophobe du tensioactif ou du polymère stabilisateur tel que défini ci-dessus,

  le cotensioactif permettant par ailleurs de rendre compatible les microfibrilles et/ou microcristaux de la substance organique fibrillaire telle que définie ci-dessus avec le solvant organique,

  ledit cotensioactif étant notamment choisi dans le groupe constitué par les alcools ayant d'environ 4 à environ 18 atomes de carbone, les acides carboxyliques ayant d'environ 4 à environ 18 atomes de carbone, les aldéhydes ayant d'environ 4 à environ 18 atomes de carbone ou les amines ayant d'environ 4 à environ 18 atomes de carbone.

L'expression « cotensioactif permettant de rendre compatible les microfibrilles et/ou microcristaux de cellulose avec le solvant organique » signifie que lorsque la suspension ou dispersion n'est pas suffisamment stable, l'usage du cotensioactif permet dans certains cas de la stabiliser.

Comme exemples d'alcools, on peut notamment citer l'hexanol, le pentanol, l'heptanol, l'octanol, le dodécanol, l'alcool benzylique etc....

Comme exemples d'acides carboxyliques, on peut notamment citer les acides caproïques, butyriques, benzoïques etc....

Comme exemples d'aldéhydes, on peut notamment citer le benzaldéhyde, le pentanal etc....

Comme exemples d'amines, on peut notamment citer l'hexylamine, l'octylamine, le benzylamine etc...

Les composés possédant une partie hydrophile et une partie hydrophobe énumérés ci-dessous, sont uniquement donnés à titre d'exemples, et ne limitent en aucun cas la présente invention. Ainsi, de façon générale, tout composé possédant une partie hydrophile et une partie hydrophobe fait partie de l'invention.

Une dispersion colloïdale avantageuse de l'invention est caractérisée en ce qu'elle contient :

- des microfibrilles et/ou des microcristaux de cellulose, en une quantité variant d'environ 0,01% à environ 50% en poids par rapport au poids total de la dispersion, et notamment d' environ 0,1% à environ 30% en poids,
- un solvant organique tel que défini ci-dessus, en une quantité variant d'environ 50% à environ 99,9% en poids par rapport au poids total de la dispersion,
- un tensioactif tel que défini ci-dessus, en une quantité variant d'environ 0,01% à environ 50% en poids par rapport au poids total de la dispersion,
- et éventuellement un cotensioactif tel que défini ci-dessus, en une quantité variant de 0 % à environ 20% en poids par rapport au poids total de la dispersion.

La dispersion colloïdale de l'invention présente avantageusement l'une au moins des propriétés suivantes :

- elle ne forme pas d'agrégats (elle est non-floculante),
- elle est biréfringente sous cisaillement,
- elle est stable sur des périodes allant d'au moins une minute à au moins 12 mois.

Dans le cas d'une sédimentation des dispersions colloïdales de l'invention, lesdites dispersions retrouvent leurs propriétés de biréfringence sous cisaillement par simple agitation mécanique.

Les suspensions ou dispersions colloïdales selon l'invention présentent toutes les caractéristiques physiques des suspensions dans l'eau :

- biréfringence sous cisaillement,
- même état de dispersion que les suspensions aqueuses de départ,
- possibilité d'obtenir des gels ou des cristaux liquides suivant l'origine des microfibrilles et/ou microcristaux des substances organiques, ayant de bonne propriétés rhéologiques.

Les critères permettant de vérifier que la dispersion colloïdale selon l'invention est stable sont :

- l'observation en microscopie électronique en transmission des cristallites individuels, et/ou
- la biréfringence sous cisaillement, et/ou
- la formation de phases cholestériques à fortes concentrations (cas du coton), qui n'est possible qu'en cas de bonne dispersion des microcristaux et/ou microfibrilles.

Ces critères sont remplis pour toutes les dispersions colloïdales selon l'invention.

L'invention a également pour objet un procédé de préparation des dispersions colloïdales telles que définies ci-dessus, caractérisé en ce que :

(1) on mélange une dispersion aqueuse de microfibrilles et/ou de microcristaux d'une substance organique fibrillaire choisie dans le groupe constitué par la cellulose, la chitine, les polysaccharides tels que le $\beta$ 1→ 3 glucane, le $\beta$ 1→ 3 xylane et le $\beta$ 1→ 4 mannane, avec un composé possédant une partie hydrophile et une partie hydrophobe, choisi dans le groupe constitué par un tensioactif, un polymère stabilisateur, un cotensioactif ou leurs mélanges, lesdits tensioactif, polymère stabilisateur ou cotensioactif étant tels que définis ci-dessus, pour obtenir une dispersion colloïdale aqueuse de microfibrilles et/ou de microcristaux de la susdite substance organique fibrillaire,
(2) on élimine l'eau de la dispersion aqueuse telle qu'obtenue à l'étape précédente pour obtenir un mélange sec de tensioactif et/ou de polymère stabilisateur, et éventuellement de cotensioactif, et d'une substance organique fibrillaire choisie dans le groupe constitué par la cellulose, la chitine, les polysaccharides tels que le $\beta$ 1→ 3 glucane, le $\beta$ 1→ 3 xylane et le $\beta$ 1→ 4 mannane,
(3) on disperse le mélange tel qu'obtenu à l'étape précédente dans un solvant organique jusqu'à l'obtention d'une dispersion.

Selon un mode de réalisation avantageux, l'invention concerne un procédé de préparation des dispersions colloïdales définies ci-dessus, caractérisé en ce que :

(1) on mélange une dispersion aqueuse de microfibrilles et/ou de microcristaux de cellulose, avec un tensioactif choisi dans le groupe constitué par le BNA, le polyoxyéthylène sorbitane trioléate ou le bromure de didécyldiméthyle ammonium,

le rapport massique entre (a) ledit tensioactif et (b) lesdits microfibrilles et/ou de microcristaux de cellulose variant d'environ 0,1 :1 à environ 20 :1, pour obtenir une dispersion colloïdale aqueuse de microfibrilles et/ou microcristaux de cellulose,

(2) on élimine l'eau de la dispersion aqueuse telle qu'obtenue à l'étape précédente pour obtenir un mélange sec de tensioactif et de cellulose, ledit mélange contenant d'environ 5% à environ 95% en poids de tensioactif par rapport au poids total du mélange, et d'environ 5% à environ 95% en poids de cellulose par rapport au poids total du mélange,

(3) on disperse le mélange tel qu'obtenu à l'étape précédente dans un solvant organique tel que défini ci-dessus, jusqu'à l'obtention d'une dispersion de microfibrilles et/ou microcristaux de cellulose, dont le taux d'adsorption massique entre ledit tensioactif et lesdits microfibrilles et/ou microcristaux de cellulose varie d'environ 0,1 à 20, et notamment d'environ 0,1 à environ 5.

Les dispersions ou suspensions aqueuses de microcristaux de cellulose, utilisées au début de l'étape (1) décrite précédemment, avant mélange avec le composé possédant une partie hydrophile et une partie hydrophobe, peuvent être préparées par hydrolyse acide suivant le protocole décrit dans plusieurs publications [1, 4]. Les microfibrilles sont obtenues par les procédés habituels d'homogénéisation [2] ou tout autre procédé permettant d'obtenir des suspensions dans l'eau non-floculantes.

Durant l'étape (1), le composé possédant une partie hydrophile et une partie hydrophobe, est mélangé sous simple agitation à la dispersion ou suspension aqueuse de microfibrilles et/ou microcristaux des substances organiques, et notamment de cellulose.

Les quantités utilisées entre (a) ledit composé possédant une partie hydrophile et (b) lesdits microfibrilles et/ou microcristaux, notamment de cellulose, dépendent de l'origine des microcristaux et/ou de microfibrilles. Il existe cependant une concentration critique qui dépend de l'origine de la cellulose, en deçà de laquelle la dispersion ou suspension obtenue est floculante, qui est par exemple d'environ 2 : 1 en rapport de masse du tensioactif et de la cellulose pour le coton et d'environ 3 :1 pour le tunicier.

Un excès de composé possédant une partie hydrophile et une partie hydrophobe, notamment de tensioactif, ne gêne pas la dispersion.

La concentration massique initiale des suspensions ou dispersions aqueuses n'est pas un paramètre décisif et peut varier de 0,1 pour cent à plusieurs pour cent. Le critère de sélection est l'obtention d'une suspension ou dispersion de viscosité pas trop élevée pour permettre le mélange homogène des deux corps (ie dispersion aqueuse + composé possédant une partie hydrophile et une partie hydrophobe).

L'étape (2) d'élimination de l'eau du mélange décrite précédemment (dispersion aqueuse + composé possédant une partie hydrophile et une partie hydrophobe) est réalisée par lyophilisation ou séchage. Elle peut également être réalisée par échange de solvant.

L'étape (3) de dispersion dans le solvant organique décrite précédemment est réalisée par simple agitation ou sonication du mélange sec obtenu à l'issue de l'étape (2).

Les taux d'adsorption massique mesurés dépendent du tensioactif et de l'origine des microcristaux et/ou des microfibrilles.

Le procédé selon l'invention permet donc, grâce à l'utilisation d'un composé possédant une partie hydrophile et une partie hydrophobe, de disperser des microfibrilles et/ou microcristaux, notamment de cellulose, dans des solvants organiques, notamment apolaires ou faiblement polaires.

Par rapport au procédé de modification chimique de la surface de la cellulose précédemment cité, le procédé de l'invention ne nécessite pas de réaction chimique contrôlée, requérant des conditions opératoires très contraignantes. Selon l'invention, les composés utilisés possédant une partie hydrophile et une partie hydrophobe, notamment les tensioactifs, peuvent être industriels ; de plus, la mise en oeuvre du procédé est très simple. Le coût de fabrication du procédé selon l'invention est donc sensiblement inférieur à celui du procédé de modification chimique connu à ce jour.

Selon un autre mode de réalisation, l'invention a encore pour objet un procédé de préparation des dispersions colloïdales telles que définies ci-dessus, caractérisé en ce que :

(a) on mélange les composés suivants :

- une dispersion aqueuse de microfibrilles et/ou de microcristaux d'une substance organique fibrillaire telle que définie ci-dessus,
- un composé possédant une partie hydrophile et une partie hydrophobe, choisi dans le groupe constitué par un tensioactif, un polymère stabilisateur, un cotensioactif ou leurs mélanges, tel que défini ci-dessus,
- un solvant organique tel que défini ci-dessus,

(b) on laisse décanter le mélange obtenu à l'étape précédente jusqu'à la séparation de deux phases : une phase

organique et une phase aqueuse,
(c) on récupère ladite phase organique qui contient les microfibrilles et/ou microcristaux de ladite substance organique fibrillaire enrobés du composé possédant une partie hydrophile et une partie hydrophobe, et dispersés dans le solvant organique.

La dispersion colloïdale aqueuse de microfibrilles et/ou de microcristaux telle qu'obtenue à l'issue de l'étape (1), après mélange avec le composé possédant une partie hydrophile et une partie hydrophobe, est nouvelle.
L'invention a donc également pour objet une dispersion colloïdale aqueuse de microfibrilles et/ou de microcristaux d'une substance organique fibrillaire choisie dans le groupe constitué par la cellulose, la chitine, les polysaccharides tels que le β 1→ 3 glucane, le β 1→ 3 xylane et le β 1→ 4 mannane, caractérisée en ce qu'elle contient en outre, au moins un composé possédant une partie hydrophile et une partie hydrophobe choisi dans le groupe constitué par un tensioactif, un polymère stabilisateur, un cotensioactif, ou leurs mélanges,

- ♦ ledit tensioactif possédant :
  - une partie hydrophile, susceptible de s'adsorber sur les microfibrilles et/ou microcristaux de la substance organique fibrillaire choisie dans le groupe constitué par la cellulose, la chitine, les polysaccharides tels que le β 1→ 3 glucane, le β 1→ 3 xylane et le β 1→ 4 mannane, et contenant par exemple des groupements oxyéthylène,
  - une partie hydrophobe, contenant par exemple une chaîne carbonée ayant au moins 6 atomes de carbone, aromatique ou non, et susceptible d'interagir avec le solvant,
    ledit tensioactif étant notamment choisi dans le groupe constitué par
    - * les tensioactifs cationiques, par exemple de la famille des alkyles d'ammonium quaternaires contenant d'environ 1 à environ 2 substituants alkyles, ayant d'environ 6 à environ 20 atomes de carbones, tel que le bromure de didécylediméthyle ammonium,
    - * les tensioactifs anioniques, par exemple de la famille des esters phosphoriques d'alkylarylphénol polyoxyalkylénés, dont le substituant alkyle contient d'environ 1 à environ 12 atomes de carbone, et d'environ 5 à environ 25 motifs oxyalkylène ayant d'environ 1 à environ 4 atomes de carbone, et notamment des motifs oxyéthylène, oxypropylène, oxybutylène, par exemple le BNA, mélange d'ester et de diester d'acide phosphorique à chaîne alkylaryle, dont le substituant alkyle contient 9 atomes de carbone et 9 motifs oxyéthylène,
    - * les tensioactifs amphotères possédant un groupement ammonium quaternaire et un groupement anionique phosphorique, par exemple de la famille des phospholipides, tels que la lécithine de soja ou d'oeuf,
    - * les tensioactifs neutres, par exemple de la famille de ceux comprenant un motif sorbitol, et une à environ 3 chaînes polyoxyéthylène, une à environ 3 chaînes grasses ayant d'environ 12 à environ 30 atomes de carbone, et notamment de 18 atomes de carbone, tel que le polyoxyéthylène (20) sorbitane trioléate,
- ♦ ledit polymère stabilisateur possédant d'environ 5 à environ 200 unités hydrophiles et d'environ 10 à environ 200 unités hydrophobes, notamment ceux possédant une masse moléculaire inférieure à 20000, tels que les copolymères blocs oxyde d'éthylène-oxyde de propylène,
- ♦ ledit cotensioactif possédant :
  - une partie hydrophile compatible avec la partie hydrophile du composé possédant une partie hydrophile et une partie hydrophobe tel que défini ci-dessus, et notamment avec la partie hydrophile du tensioactif ou du polymère stabilisateur tel que défini ci-dessus,
  - une partie hydrophobe compatible avec la partie hydrophobe du composé possédant une partie hydrophile et une partie hydrophobe tel que défini ci-dessus, et notamment avec la partie hydrophobe du tensioactif ou du polymère stabilisateur tel que défini ci-dessus,

et permettant de rendre compatible les microfibrilles et/ou microcristaux de la substance organique fibrillaire telle que définie ci-dessus avec le solvant organique,
ledit cotensioactif étant notamment choisi dans le groupe constitué par les alcools ayant d'environ 4 à environ 18 atomes de carbone, les acides carboxyliques ayant d'environ 4 à environ 18 atomes de carbone, les aldéhydes ayant d'environ 4 à environ 18 atomes de carbone ou les amines ayant d'environ 4 à environ 18 atomes de carbone.
Selon un mode de réalisation avantageux, l'invention concerne une dispersion aqueuse colloïdale telle que définie ci-dessus, de microfibrilles et/ou de microcristaux de cellulose.
Selon un autre mode de réalisation avantageux, la dispersion aqueuse colloïdale est caractérisée en ce que

le rapport massique entre (a) le tensioactif et éventuellement le cotensioactif, et (b) la cellulose, varie d'environ 0,1 : 1 à environ 20: 1, et est notamment d'environ 1 : 1 à environ 6 : 1.

Une dispersion colloïdale avantageuse de l'invention est caractérisée en ce qu'elle contient :

- des microfibrilles et/ou des microcristaux de cellulose, en une quantité variant d'environ 0,01% à environ 50% en poids par rapport au poids total de la dispersion,
- un tensioactif, et éventuellement un cotensioactif, en une quantité variant d'environ 0,01% à environ 50% en poids par rapport au poids total de la dispersion, ledit tensioactif étant notamment choisi dans le groupe constitué par le BNA, le polyoxyéthylène sorbitane trioléate ou le bromure de didécylediméthyle ammonium, et ledit cotensioactif étant notamment l'hexanol,
- de l'eau en une quantité variant d'environ 50% à environ 99,9% en poids par rapport au poids total de la dispersion, et/ou un solvant choisi dans le groupe constitué par le diméthylsulfoxyde, les polyalcools et notamment le polyéthylèneglycol, le glycérol.

Selon un mode de réalisation avantageux, la dispersion colloïdale aqueuse de microfibrilles et/ou de microcristaux selon l'invention, telle qu'obtenue à l'issue de l'étape (1) du procédé de préparation tel que décrit ci-dessus, c'est à dire après mélange d'une dispersion aqueuse de microfibrilles et/ou de microcristaux avec le composé possédant une partie hydrophile et une partie hydrophobe, peut, une fois séchée, être redispersée :

- dans de l'eau ou,
- dans un solvant organique.

Selon un mode de réalisation avantageux, l'invention a également pour objet l'utilisation d'une dispersion colloïdale de microcristaux et/ou microfibrilles de cellulose, de chitine ou de polysaccharide telle que définie ci-dessus, pour la préparation de gels, de cristaux liquides ou de matériaux comprenant des microfibrilles et/ou des microcristaux de cellulose.

Le solvant organique tel que défini ci-dessus, entrant dans la composition des dispersions colloïdales de l'invention, peut être épaissi et/ou rendu plus visqueux lorsqu'il est additionné d'un mélange de microcristaux et/ou microfibrilles d'une substance organique fibrillaire telle que définie ci-dessus, et d'un composé possédant une partie hydrophile et une partie hydrophobe tel que défini ci-dessus.

A ce titre, l'invention a également pour objet un solvant organique tel que défini ci-dessus, épaissi et/ou visqueux, caractérisé en ce qu'il comporte :

- des microcristaux et/ou des microfibrilles d'une substance organique fibrillaire choisie dans le groupe constitué par la cellulose, la chitine, les polysaccharides tels que le $\beta$ 1 $\rightarrow$3 glucane, le $\beta$ 1 $\rightarrow$3 xylane et le $\beta$ 1$\rightarrow$4 mannane,
- un composé possédant une partie hydrophile et une partie hydrophobe choisi dans le groupe constitué par un tensioactif, un polymère stabilisateur, un cotensioactif

ou leurs mélanges, lesdits tensioactif, polymère stabilisateur et cotensioactif étant tels définis ci-dessus.

A titre d'exemple, on peut citer les huiles minérales et/ou organiques, d'origine synthétique ou naturelle, de consistances épaissies et/ou visqueuses, comprenant des microcristaux et/ou des microfibrilles de cellulose, et un tensioactif choisi dans le groupe constitué par le BNA, le polyoxyéthylène sorbitane trioléate ou le bromure de didécylediméthyle ammonium.

Les domaines d'applications des dispersions colloïdales selon l'invention, de microcristaux et/ou de microfibrilles de cellulose, de chitine ou de polysaccharide dans un solvant organique, sont notamment ceux cités précédemment concernant les dispersions aqueuses colloïdales de microcristaux et/ou microfibrilles de cellulose connues à ce jour, ainsi que d'autres domaines plus spécifiquement liés à la dispersion dans les solvants organiques.

Ainsi, en ce qui concerne par exemple la fabrication de matériaux composites, la dispersion selon l'invention de microcristaux et/ou microfibrilles de cellulose dans des solvants organiques, permet d'élargir le procédé de fabrication des composites aux polymères solubles dans ces solvants organiques, qui constituent la majorité des polymères synthétiques.

Il est ainsi possible, selon l'invention, de mélanger une solution de polymère à la dispersion de microcristaux et/ou de microfibrilles dans le même solvant et d'obtenir un film où les renforts cellulosiques sont très bien dispersés (voir exemple 4), ce qui est une des conditions pour obtenir un bon renfort.

Une autre voie de mise en oeuvre plus simple consiste à mélanger directement par malaxage le polymère et les microcristaux et/ou microfibrilles de cellulose préalablement recouvert de tensioactifs, ce qui augmente leur compatibilité, et donc leur mélange avec la matrice.

Enfin, il est possible d'obtenir des matériaux par dispersion des microcristaux et/ou microfibrilles de cellulose

dans un monomère (le styrène par exemple), puis par polymérisation soit par amorçage radicalaire, anionique ou cationique, soit sous rayonnement (UV, gamma, etc...). Cette application peut être étendue à la polycondensation, par exemple par réaction d'un mélange de diacide et de diamine, jusqu'à l'obtention d'un polyamide, et à la fabrication de résines thermodurcissables.

En raison de l'anisotropie diamagnétique et de la présence de charge sur les microcristaux et/ou microfibrilles de cellulose, les matériaux peuvent également être orientés sous champ magnétique ou électrique. Pour une concentration suffisamment élevée, on peut obtenir ainsi des cristaux liquides orientés solides.

En ce qui concerne le domaine des épaississants, la présente invention permet d'étendre les propriétés spécifiques épaississantes des microcristaux et/ou microfibrilles de cellulose aux solvants organiques.

Concernant le domaine de la cosmétique, la présente invention permet d'étendre les applications des suspensions ou dispersions aqueuses de microcristaux et/ou microfibrilles de cellulose, aux suspensions ou dispersions dans les solvants organiques.

En ce qui concerne la fabrication de films à propriétés optiques variables, la présente invention permet d'obtenir, par la voie du solvant organique, le même résultat que celui de l'art antérieur, ce qui permet un séchage plus facile (cas de l'éther par exemple).

L'invention concerne également un mélange sec de tensioactif et/ou de polymère stabilisateur et éventuellement de cotensioactif, et d'une substance organique fibrillaire choisie dans le groupe constitué par la cellulose, la chitine, les polysaccharides tels que le β 1→ 3 glucane, le β 1→ 3 xylane et le β 1→ 4 mannane.

L'invention concerne également un procédé de préparation du mélange sec défini ci-dessus, caractérisé en ce que :

(1) on mélange une dispersion aqueuse de microfibrilles et/ou de microcristaux d'une substance organique fibrillaire choisie dans le groupe constitué par la cellulose, la chitine, les polysaccharides tels que le β 1→ 3 glucane, le β 1→ 3 xylane et le β 1→ 4 mannane, avec un composé possédant une partie hydrophile et une partie hydrophobe choisi dans le groupe constitué par un tensioactif, un polymère stabilisateur, un cotensioactif ou leurs mélanges, ledit tensioactif et ledit polymère stabilisateur étant tels que définis précédemment, et ledit cotensioactif étant tel que défini précédemment,

pour obtenir une dispersion aqueuse de microfibrilles et/ou de microcristaux de la susdite substance organique fibrillaire telle que définie ci-dessus,

(2) on élimine l'eau de la dispersion aqueuse telle qu'obtenue à l'étape précédente pour obtenir le susdit mélange.

Le mélange défini ci-dessus peut être avantageusement utilisé pour la préparation de matériaux comprenant des microfibrilles et/ou des microcristaux de cellulose.

Description des figures :

La Figure 1 représente l'évolution du module élastique E en fonction de la température pour le matériau pur et renforcé avec 6% en poids de microcristaux et/ou microfibrilles (whiskers) de cellulose de tunicier (voir Exemple 4).

L'axe des abscisses représente la température exprimée en degré Kelvin (K), et l'axe des ordonnées représente le module élastique E exprimé en Pascal (Pa).

Le symbole du losange noir (♦) représente le polypropylène atactique pur.

Le symbole du carré noir ($\bar{\omega}$) représente le polypropylène atactique renforcé avec 6% en poids de microfibrilles et/ou microcristaux de cellulose (whiskers) dispersés.

La Figure 2 représente l'analyse mécanique dynamique du polystyrène pur et renforcé par 2% en poids de microcristaux de tunicier.

L'axe des abscisses représente la température exprimée en degré Celsius (°C), et l'axe des ordonnées représente le module élastique E exprimé en Pascal (Pa).

Le symbole du cercle blanc (φ) représente le polystyrène pur.

Le symbole du triangle noir (▲) représente le polystyrène renforcé avec 2% en poids de microfibrilles et/ou microcristaux de cellulose.

## EXEMPLES

**Exemple 1 :** Préparation d'une dispersion colloïdale, stable et biréfringente sous cisaillement, de microcristaux de cellulose de tuniciers dans le toluène.

1) Préparation de la dispersion aqueuse

La cellulose utilisée est une cellulose d'origine animale (la tunicine), extraite de l'enveloppe d'animaux marins appartenant à la famille des tuniciers.

a) Première étape

Les tuniciers sont découpés de façon grossière et nettoyés à l'eau.

Ensuite, ils sont placés dans une solution de potasse à 5% en poids durant toute une nuit.

Les morceaux de tuniciers sont lavés pendant 6 heures à une température de 80°C dans un mélange constitué d'une solution de chlorite (17g de $NaClO_2$ dans 1 litre d'eau distillée), et d'une solution tampon d'acétate de pH = 4,5 (27g de soude et 75 ml d'acide acétique complétée à un litre avec de l'eau distillée).

Cette solution, constituée de chlorite et de tampon acétate, est remplacée toutes les deux heures.

Cette opération est répétée jusqu'à ce que les morceaux de tuniciers soient blancs.

Cette première étape permet l'élimination de toutes les incrustations organiques dans les parois grâce au pouvoir oxydant du chlore. Celui-ci élimine les protéines qui sont ensuite dissoutes dans la potasse.

b) Deuxième étape

Les tuniciers sont placés dans un mixer pendant 20 minutes (20 passage de 1 minute). On obtient une dispersion aqueuse floculante.

c) Troisième étape: hydrolyse des tuniciers

Le mélange obtenu après mixage est introduit dans un ballon placé dans un bain de glace. On ajoute de l'eau distillée (environ 200g de produit broyé pour 150g d'eau distillée) et de l'acide sulfurique 95% goutte à goutte (350 ml pour 350g de mélange produit broyé et eau distillée). On chauffe ensuite 30 minutes au bain marie à 80°C. Toutes ces étapes sont effectuées sous agitation mécanique pour éviter l'échauffement.

Le mélange obtenu est filtré sur un fritté n°4 (diamètre des pores 5 à 15 mm). La cellulose se dépose alors sur le filtre sous forme d'une pâte visqueuse. La pâte est lavée plusieurs fois à l'eau distillée afin d'éliminer toute trace d'acide. On vérifie que le pH est neutre. On redisperse ensuite cette pâte dans l'eau distillée.

Le mélange obtenu est soniqué par petites quantités pendant 2 minutes environ puis filtré sur un fritté n°1 afin de retenir les plus gros agrégats.

Ainsi, on obtient une dispersion aqueuse non floculante de microcristaux et/ou microfibrilles (whiskers) de cellulose dans l'eau, à une concentration d'environ 0,3 % p/p.

2) Mise en suspension dans le toluène

a) Première étape : mélange de la dispersion aqueuse avec le tensioactif

A 100 ml de la dispersion aqueuse à 0,3% ainsi obtenue, sont ajoutés sous vive agitation, 1,2 g du tensioactif Beycostat NA, commercialisé par la société CECCA, constitué d'un mélange d'ester et de diester d'acide phosphorique à chaîne alkylaryle, dont le substituant alkyle possède 9 atomes de carbone et 9 motifs oxyéthylènes.

A titre indicatif, les formules du diester et de l'ester de l'acide phosphorique présents dans le BNA sont données ci-dessous :

- monoester :

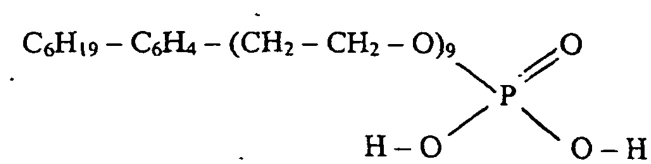

- diester :

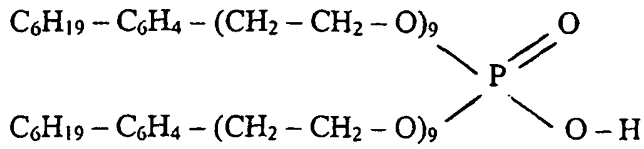

Le pH initial de la dispersion ou suspension aqueuse en mélange avec le tensioactif est de 2. Il est porté lentement à une valeur de 9 par ajouts successifs de soude NaOH à 1% p/p dans l'eau.

b) Deuxième étape : élimination de l'eau

Le mélange est ensuite lyophilisé afin d'enlever l'eau.

c) Troisième étape : dispersion dans un solvant organique

Le lyophilisat est ensuite placé dans 100 ml de toluène, puis redispersé 5 mn à l'aide d'un appareil de type Ultra-Turrax à 12000 tours/mn, puis soniqué 1 mn par lot de 20 ml à l'aide d'un appareil de type Branson Sonifier.

La dispersion ou suspension colloïdale de microfibrilles et/ou de microcristaux de cellulose obtenue est transparente à l'oeil et présente, sous cisaillement entre polariseur croisé, une biréfringence très visible à l'oeil nu. Lorsque cette opération est effectuée dans les mêmes conditions à pH = 2 dans la dispersion aqueuse, une dispersion floculante dont les agrégats sont visibles à l'oeil nu est obtenue.

**Exemple 2 :** Préparation d'une dispersion colloïdale, stable et biréfringente sous cisaillement, de microcristaux de cellulose de tuniciers dans le toluène.

A 10 ml d'une dispersion de microcristaux de tuniciers à 0,65% p/p préparée comme décrit dans l'exemple 1, sont ajoutés 6 ml d'une solution à 6,5% p/p de tensioactif polyoxyéthylène sorbitane trioléate (commercialisé par la société Aldrich sous le nom de Tween 85). Après vigoureuse agitation, le mélange est lyophilisé, puis redispersé dans 20 ml de cyclohexane. Aucun agrégat n'est visible à l'oeil nu, la dispersion apparaît homogène.

Par ailleurs, la dispersion colloïdale de microfibrilles et/ou de microcristaux de cellulose obtenue, présente une forte biréfringence sous cisaillement entre polariseurs croisés.

**Exemple 3 :** Préparation d'une dispersion colloïdale, stable et biréfringente sous cisaillement, de microcristaux de cellulose de tuniciers dans l'acétone.

A 100 ml d'une dispersion de microcristaux et/ou microfibrilles de tuniciers à 0,3% p/p préparée comme décrit dans l'exemple 1, sont ajoutés sous vive agitation, 1,2 g du tensioactif Beycostat NA.

Le pH initial de la suspension en mélange avec le tensioactif est de 2. Il est porté lentement à une valeur de 9 par ajout successif de soude NaOH à 1% p/p dans l'eau. Le mélange est ensuite lyophilisé afin d'enlever l'eau.

Le lyophilisat est ensuite placé dans 100 ml d'acétone et 20 ml d'hexanol (cotensioactif), redispersé 5 mn à l'aide d'un appareil de type Ultra-Turrax à 12000 tours/mn, puis soniqué 1 mn par lot de 20 ml à l'aide d'un appareil de type Branson Sonifier.

La suspension colloïdale de microcristaux et/ou de microfibrilles de cellulose obtenue est translucide à l'oeil et présente sous cisaillement entre polariseur croisé une biréfringence très visible à l'oeil nu.

**Exemple 4** : Préparation d'un matériau composite à matrice thermoplastique renforcé par des microcristaux et/ou microfibrilles de tuniciers (whiskers) dispersés de façon homogène.

Une suspension à 0,3% p/p de microcristaux et/ou microfibrilles de cellulose (whiskers) de tunicier est préparée suivant le protocole décrit dans l'exemple 1.

100 ml de cette suspension sont mélangés à une solution obtenue par dissolution à chaud de 5 g de polypropylène atactique (Aldrich) dans 100 ml de toluène sous vigoureuse agitation.

Le mélange est alors soumis à évaporation sous hotte pendant 24 h. Le toluène résiduel est extrait par séchage sous vide pendant 24 h à 50°C. La poudre obtenue est ensuite pressée à 120°C et 50 bars afin d'obtenir un film.

Les matériaux composites ainsi obtenus comportent 6% p/p de whiskers de tuniciers dispersés de façon homogène dans une matrice de polypropylène atactique. Le module du matériau composite est fortement augmenté au dessus de sa transition vitreuse par la présence de whiskers de tuniciers, de façon analogue à ce qui a été montré pour des matériaux obtenus à partir de dispersions dans l'eau [20].

La figure 1 suivante représente l'évolution du module élastique E en fonction de la température pour le matériau pur et renforcé avec 6% de whiskers de tunicier.

**Exemple 5 :** Préparation d'un cristal liquide cholestérique dans le toluène à partir d'une suspension de microcristaux de coton dans le toluène.

Une suspension aqueuse non-floculante de microcristaux de coton à 2% en poids est obtenue par hydrolyse acide de papier Whatman n° 1 comme décrit par Revol *et al* [21].

A 100 ml de cette suspension sont ajoutés 8 g du tensioactif BNA (société CECCA) sous vigoureuse agitation. Le pH est porté à 9 par ajout progressif d'une solution de NaOH 1% p/p.

Cette préparation est lyophilisée, redispersée par passage a l'Ultra-Turrax puis soniquée dans 100 ml de cyclohexane (voir exemple 1). Cette préparation est filtrée sur une membrane de téflon, commercialisée par Cole-Parmer, de taille 1 µm puis centrifugée à 40000 g pendant 1 h. Le culot est récupéré, puis redispersé dans 5 ml de cyclohexane par sonification pendant 1 mn.

Le mélange obtenu, assez visqueux, est une suspension stable présentant un taux de solide de 43% en poids. Des mesures du taux d'adsorption par pesée différentielle indiquent une proportion tensioactif/cellulose de 0,66.

Dans ce cas, une suspension à taux de cellulose réel de 26% en poids, est obtenue. Il est à noter que des suspensions fluides dans l'eau de microcristaux de coton ne peuvent être obtenues pour des taux supérieurs à 10% en poids. Au delà, les suspensions se présentent sous forme de gels.

Cette suspension est observée en microscopie optique dans un capillaire (Microslides) d'épaisseur 200µm. Placée entre polariseurs croisés, cette suspension présente deux phases : l'une est isotrope, et apparaît donc noire, l'autre est biréfringente. La phase biréfringente peut se présenter sous forme de grands domaines, ou de petites gouttes nommées tactoïdes. Dans ces deux structures, des raies alternées blanches et noires indiquent que cette phase biréfringente est de type cholestérique, déjà observée dans les suspensions aqueuses pour des concentrations bien inférieures (entre 4 et 7% p/p) [4].

Le pas de ce cristal cholestérique est de 4µm environ, ce qui est bien inférieur à ceux mesurés pour les suspensions dans l'eau.

**Exemple 6** : Polymérisation du styrène en présence de microcristaux de tuniciers

Un mélange sec de microcristaux de tuniciers et de tensioactif BNA est préparé comme décrit dans l'exemple 1.

3.6 g de ce mélange sont redispersés dans 200 ml de styrène, comme décrit dans l'exemple 1. La dispersion obtenue est centrifugée à 40 000 g pendant 1 h pour éliminer l'excès de tensioactif. Le culot est redispersé dans 40 ml de styrène et 180 mg d'azobisisobutyronitrile (AIBN) comme amorceur, puis placé dans un moule téfloné rectangulaire de 8 cm x 3 cm. L'ensemble est placé pendant 24 h à 80°C, puis moulé pendant 10 mn à 140°C sous une pression de 10 MPa.

Les résultats obtenus en analyse mécanique montrent un effet de renfort important au-dessus de la température de transition vitreuse puisque le module élastique E du polystyrène est multiplié par un facteur d'environ dix.

De plus, la présence de seulement 2% de (microfibrilles et/ou microcristaux de) cellulose prévient l'écoulement du polymère jusqu'à au moins 230°C.

La figure 2 suivante représente l'analyse mécanique dynamique du polystyrène pur et renforcé par 2% de microcristaux de tunicier.

**Exemple 7 :** Préparation d'un gel en milieu organique à partir d'une suspension.

La purification des microfibrilles suit un schéma classique.

Une suspension aqueuse de microfibrilles de soja a été préparée de la façon décrite ci-dessous.

Après broyage, les grains de soja sont soumis au traitement suivant :

- extraction azéotropique en continu avec un mélange toluène-alcool (38-62),
- deux extractions à l'eau,
- extraction à la soude 2% p/p,
- blanchiment au chlorite de sodium,
- homogénéisation dans un appareil de type Waring Blendor.

L'homogénéisation finale pour individualiser les microfibrilles s'effectue à l'aide d'un appareil Manton Gaulin.

On introduit de 200 à 400 ml d'une suspension contenant de 1 à 3% en poids de cellulose dans l'eau. La suspension est soumise à des passages successifs pendant une période de temps de 1 h à 1 h 30. La suspension obtenue est très pâteuse et ne s'écoule pas.

La concentration de cette suspension est ramenée à 0.3% par ajout d'eau distillée.

A 100 ml de cette suspension, sont ajoutés 100 ml d'une solution à 3% en poids du tensioactif BNA (commercialisé par la Société CECCA). Le pH du mélange est ramené à 9 par ajouts successifs d'une solution de soude à 1% p/p. L'ensemble est lyophilisé pendant 24 h et conduit à une poudre blanche collante.
Ce mélange sec est redispersé dans 5 ml de toluène à l'aide d'un appareil de type Ultra-Turrax.

On obtient ainsi un gel contenant 6% de cellulose qui ne s'écoule pas lorsque l'on renverse le récipient le contenant.

Références

[1] R. H. Marchessault, F. F. Morehead and N. M. Walter, Nature, 1959, 184: p. 632.

[2] USP 4,483,743, A. F. Turbak, *Microfibrillated cellulose,* 1984 : USA.

[3] FR 95 01460, E. Dinand, M. R. Vignon, H. Chanzy, I. Vincent et A. Maureaux, *Cellulose microfibrillee et son procédé d'obtention a partir des pulpes de betteraves sucrières,* 1995: France.

[4] J.-F. Revol, H. Bradford, J. Giasson and D. J. Gray, *Helicoidal self-ordering of cellulose microfibrils in aqueous suspension.* Int. J. Biol. Macromol., 1992, 14: p. 170-171.

[5] X. M. Dong, T. Kimura, J.-F. Revol and D. G. Gray, *Effects of ionic strength on the isotropic-chiral nematic phase transition of suspensions of cellulose crystallites.* Langmuir, 1996, 12 (8) : p. 2076-2082.

[6] E. Dinand, H. Chanzy and M. R. Vignon, *Parenchymal cell cellulose from sugar beet pulp : preparation and properties*. Cellulose, 1996, **3** : p. 183-188.

[7] PCT Int. Appl. WO 95 23,824, V. Favier, J. Y. Cavaillé, H. Chanzy and B. Ernst, *Polymers reinforced with cellulose microfibrils, .* 1995, Elf Atochem: France.

[8] USP 5,629,055, J.-F. Revol, L. Godbout, L. Donat and D. G. Gray, *Solidified liquid crystals of cellulose with optically variable properties,* 1997, Pulp and Paper Research Institue of Canada : Canada.

[9] FR 2,751,981 (WO 98/02499), B. Langlois, *Fluide comprenant des microfibrilles de cellulose et son application pour l'exploitation de gisements pétroliers,* 1996, Rhone Poulenc Chimie : France.

[10] FR 2,744,632, J. Mondet, *Utilisation d'une suspension aqueuse de microfibrilles d'origine naturelle pour la préparation de compositions cosmétiques ou dermatologiques, compositions cosmétiques ou dermatologiques et applications.*, 1997, L'Oréal : France.

[11] FR 2 739 394 (WO 97/12954), V. Guillou, *Formulations détartrantes et nettoyantes a base de microfibrilles de cellulose,* 1995, Rhone Poulenc Chimie : France.

[12] USP 4,923,981, M. K. Weibel and C. D. Myers, *Use of parenchymal cellulose to improve comestibles,* 1989 : US A.

[13] USP 4,659,388, S. Innami and Y. Fukui, *Additive composition for foods or drugs,* 1987 : Japan.

[14] A. F. Turbak, F. W. Snyder and K. R. Sandberg, *Microfibrillated cellulose, u new cellulose product : properties, uses and commercial potential.* J. Appl. Polym. Sci.: Appl. Polym. Symp., 1983, 37 : p. 815-827.

[15] PCT Int. Appl. WO 97 12,917, J.-Y. Cavaillé, H. Chanzy, E. Fleury and J.-F. Sassi, *Surface-modified cellulose microfibrils, method for making same, and use thereof as a filler in composite materials*, 1997, Rhone-Poulenc Chimie : France.

[16] USP 4,144,122, J. G. Emanuelsson and S. L. Wahlen, *Quaternary ammonium compounds and treatment of cellulose pulp and paper therewith,* 1979, Berol Kemi AB: Sweden.

[17] FR 2,759,376, R. Ralairina, R. De Baynast, J. Desbrières and M. Rinaudo, *Procédé pour obtenir des microfibrilles de celluloses cationiques ou leurs dérivés soluble, ainsi que celluloses obtenues par ce procédé,* 1997 : France.

[18] FR 2,750,994 (WO 98/ 02486), J. Benchimol, G. Guerin, I. Vincent, R. Cantiani and A. Senechal, *Additivation de microfibrilles de cellulose avec de la cellulose carboxylée à bas degré de substitution,* 1996 : France.

[19] FR 2,751,659 (WO 98/02487), J. Benchimol, G. Guerin, I. Vincent, R. Cantiani and A. Senechal, *Additivation de microfibrilles de cellulose avec de la cellulose carboxylée à haut degré de substitution,* 1996: France.

[20] V. Favier, H. Chanzy and J.-Y. Cavaillé, *Polymer Nanocomposites Reinforced by cellulose Whiskers.* Macromolecules, 1995 , 28 : p. 6365-6367.

[21] J.-F. Revol, L. Godbout, X.-M. Dond and D. G. Gray, *Chiral nematic suspension of cellulose crystallites; phase separation and magnetic field orientation.* Liquid Crystals, 1994, **16** : p. 127-134.

[22] J.-F. Revol and R. H. Marchessault, Int. J. Biol. Macromol., 15, 329-335, 1993.

[23] United States Patent, 4 286 087 Austin et al., August 25, 1981.

[24] Chanzy H. and Vuong R., Journal of Microscopy, 1977, 11, p. 143 - 150.

[25] Chanzy H. and Vuong R. in « Polysaccharides : Topics in Structure and Morphology », Atkins, E.D.T Editor, MacMillan, London, 1985.

[26] WO 93/10172, Smith B.C., Goudswaard I., Chanzy H., Cartier N., « Thermosetting plastic and cellulose fiber composition », 1993.

**Revendications**

1. Dispersion colloïdale, dans un solvant organique, de microfibrilles et/ou de microcristaux d'une substance organique fibrillaire choisie dans le groupe constitué par la cellulose, la chitine, les polysaccharides tels que le β 1→3 glucane, le β 1→3 xylane et le β 1→4 mannane, contenant en outre au moins un composé possédant une partie hydrophile et une partie hydrophobe, ladite dispersion colloïdale correspondant à une dispersion de particules solides ayant des tailles caractéristiques variant de 1 nm à 1 000 nm.

2. Dispersion selon la revendication 1, **caractérisée en ce que** le composé possédant une partie hydrophile et une partie hydrophobe est choisi dans le groupe constitué par un tensioactif, un polymère stabilisateur, un cotensioactif ou leurs mélanges, et notamment un mélange de tensioactif et de cotensioactif.

3. Dispersion selon la revendication 1 ou la revendication 2 de microfibrilles et/ou de microcristaux de cellulose.

4. Dispersion selon l'une quelconque des revendications 1 à 3, **caractérisée en ce que** le solvant organique présente une constante diélectrique inférieure ou égale à 37,5, et/ou **en ce que** le solvant organique est choisi dans le groupe constitué par :

   - les hydrocarbures aliphatiques ayant de 5 à 20 atomes de carbone, notamment le pentane, l'hexane, l'heptane, l'octane, le dodécane ou le cyclohexane,
   - les hydrocarbures aromatiques, notamment le xylène, le toluène ou la décaline,
   - les solvants chlorés, notamment le chloroforme, le dichlorométhane, le tétrachlorure de carbone, le dichloroéthane,
   - les cétones ayant de 3 à 10 atomes de carbone, notamment l'acétone ou la méthyléthylcétone,
   - les composés vinyliques susceptibles d'être polymérisés, notamment les méthacrylates et les acrylates d'alkyles ayant de 1 à 10 atomes de carbones, le styrène, l'acétate de vinyle,
   - les époxydes, notamment ceux présentant une chaîne aliphatique ayant de 1 à 10 atomes de carbones, et/ou une chaîne aromatique, les diépoxydes, les triépoxydes et/ou les tétraépoxydes,
   - les amines primaires, secondaires ou tertiaires, notamment celles comportant une chaîne aliphatique ayant de 1 à 10 atomes de carbone et/ou une chaîne aromatique, les diamines, triamines ou tétramines,
   - les acétates d'alkyles ayant de 1 à 10 atomes de carbone, notamment les acétates de méthyle, d'éthyle, de propyle ou de butyle,
   - les éthers comportant une chaîne alkyle ayant de 1 à 20 atomes de carbones ou une chaîne aromatique tels que l'éther éthylique, ou l'éther benzylique,
   - les aldéhydes, les acides carboxyliques et/ou leurs dérivés acylés et anhydrides, les polyacides, comportant une chaîne alkyle ayant de 1 à 20 atomes de carbones ou une chaîne aromatique tels que l'acétaldéhyde, l'acide acétique, l'anhydride maléique, le benzaldéhyde,
   - les alcools primaires, secondaires ou tertiaires, notamment ceux comportant une chaîne aliphatique ayant de 1 à 10 atomes de carbone, et/ou une chaîne aromatique, les polyalcools, notamment le méthanol, l'éthanol, l'isopropanol, le butanol ou l'alcool benzylique,
   - le tétrahydrofuranne (THF), la pyridine, le diméthylformamide (DMF), le diméthylacétamide (DMAc),
   - les huiles minérales et/ou organiques, d'origine synthétique ou naturelle, telles que les huiles silicones ou les huiles végétales,

   ou leurs mélanges.

5. Dispersion selon l'une quelconque des revendications 1 à 4, **caractérisée en ce que** la quantité de cellulose varie de 0,01% à 50% en poids par rapport au poids total de la dispersion.

6. Dispersion selon l'une quelconque des revendications 1 à 5, **caractérisée en ce que** le composé possédant une partie hydrophile et une partie hydrophobe est :

   (a) un tensioactif possédant :

- une partie hydrophile, susceptible de s'adsorber sur les microfibrilles et/ou microcristaux du composé choisi dans le groupe constitué par la cellulose, la chitine, les polysaccharides tels que le $\beta$ 1$\rightarrow$ 3 glucane, le $\beta$ 1$\rightarrow$ 3 xylane et le $\beta$ 1$\rightarrow$ 4 mannane, et contenant par exemple des groupements oxyéthylène,
- une partie hydrophobe, contenant par exemple une chaîne carbonée ayant au moins 6 atomes de carbone, aromatique ou non, et susceptible d'interagir avec le solvant,

  ledit tensioactif étant notamment choisi dans le groupe constitué par

  * les tensioactifs cationiques, par exemple de la famille des alkyles d'ammonium quaternaires contenant de 1 à 2 substituants alkyles, ayant de 6 à 20 atomes de carbones, tel que le bromure de didécylediméthyle ammonium,
  * les tensioactifs anioniques, par exemple de la famille des esters phosphoriques d'alkylarylphénol polyoxyalkylénés, dont le substituant alkyle contient de 1 à 12 atomes de carbone, et de 5 à 25 motifs oxyalkylène ayant de 1 à 4 atomes de carbone, et notamment des motifs oxyéthylène, oxypropylène, oxybutylène, par exemple le BNA, mélange d'ester et de diester d'acide phosphorique à chaîne alkylaryle, dont le substituant alkyle contient 9 atomes de carbone et 9 motifs oxyéthylène,
  * les tensioactifs amphotères possédant un groupement ammonium quaternaire et un groupement anionique phosphorique, par exemple de la famille des phospholipides, tels que la lécithine de soja ou d'oeuf,
  * les tensioactifs neutres, par exemple de la famille de ceux comprenant un motif sorbitol, et une à 3 chaînes polyoxyéthylène, une à 3 chaînes grasses ayant de 12 à 30 atomes de carbone, et notamment de 18 atomes de carbone, tel que le polyoxyéthylène (20) sorbitane trioléate,

(b) ou, un polymère stabilisateur possédant de 5 à 200 unités hydrophiles et de 10 à 200 unités hydrophobes, notamment ceux possédant une masse moléculaire inférieure à 20000, tels que les copolymères blocs oxyde d'éthylène-oxyde de propylène.

7. Dispersion selon l'une quelconque des revendications 1 à 6, **caractérisée en ce que** le cotensioactif possède :

   - une partie hydrophile compatible avec la partie hydrophile du composé possédant une partie hydrophile et une partie hydrophobe tel que défini à la revendication 6, et notamment avec la partie hydrophile du tensioactif ou du polymère stabilisateur tel que défini à la revendication 6,
   - une partie hydrophobe compatible avec la partie hydrophobe du composé possédant une partie hydrophile et une partie hydrophobe tel que défini à la revendication 6, et notamment avec la partie hydrophobe du tensioactif ou du polymère stabilistateur tel que défini ci-dessus,

   le cotensioactif permettant par ailleurs de rendre compatible les microfibrilles et/ou microcristaux de la substance organique fibrillaire telle que définie à la revendication 1 avec le solvant organique,

   ledit cotensioactif étant notamment choisi dans le groupe constitué par les alcools ayant de 4 à 18 atomes de carbone, les acides carboxyliques ayant de 4 à 18 atomes de carbone, les aldéhydes ayant de 4 à 18 atomes de carbone ou les amines ayant de 4 à 18 atomes de carbone.

8. Dispersion selon l'une quelconque des revendications 1 à 7, **caractérisée en ce qu'**elle contient :

   - des microfibrilles et/ou des microcristaux de cellulose, en une quantité variant de 0,01% à 50% en poids par rapport au poids total de la dispersion, et notamment de 0,1% à 30% en poids,
   - un solvant organique tel que défini à la revendication 4, en une quantité variant de 50% à 99,9% en poids par rapport au poids total de la dispersion,
   - un tensioactif tel que défini à la revendication 6, en une quantité variant de 0,01% à 50% en poids par rapport au poids total de la dispersion,
   - et éventuellement un cotensioactif tel que défini à la revendication 7, en une quantité variant de 0 % à 20% en poids par rapport au poids total de la dispersion.

9. Dispersion selon l'une quelconque des revendications 1 à 8, **caractérisée en ce qu'**elle présente l'une au moins des propriétés suivantes :

   - elle ne forme pas d'agrégats (elle est non-floculante),
   - elle est biréfringente sous cisaillement,
   - elle est stable sur des périodes allant d'au moins une minute à au moins 12 mois.

**10.** Procédé de préparation d'une dispersion selon l'une quelconque des revendications 1 à 9, **caractérisé en ce que** :

(1) on mélange une dispersion aqueuse de microfibrilles et/ou de microcristaux d'une substance organique fibrillaire choisie dans le groupe constitué par la cellulose, la chitine, les polysaccharides tels que le β 1→ 3 glucane, le β 1→ 3 xylane et le β 1→ 4 mannane, avec un composé possédant une partie hydrophile et une partie hydrophobe choisi dans le groupe constitué par un tensioactif, un polymère stabilisateur, un cotensioactif ou leurs mélanges, ledit tensioactif et ledit polymère stabilisateur étant tels que définis à la revendication 6, et ledit cotensioactif étant tel que défini à la revendication 7,

pour obtenir une dispersion aqueuse de microfibrilles et/ou de microcristaux de la susdite substance organique fibrillaire,

(2) on élimine l'eau de la dispersion aqueuse telle qu'obtenue à l'étape précédente pour obtenir un mélange sec de tensioactif et/ou de polymère stabilisateur et éventuellement de cotensioactif, et d'une substance organique fibrillaire choisie dans le groupe constitué par la cellulose, la chitine, les polysaccharides tels que le β 1→ 3 glucane, le β 1→ 3 xylane et le β 1→ 4 mannane,

(3) on disperse le mélange tel qu'obtenu à l'étape précédente dans un solvant organique jusqu'à l'obtention d'une dispersion.

**11.** Procédé de préparation selon la revendication 10, **caractérisé en ce que** :

(1) on mélange une dispersion aqueuse de microfibrilles et/ou de microcristaux de cellulose, avec un tensioactif choisi dans le groupe constitué par le BNA, le polyoxyéthylène sorbitane trioléate ou le bromure de didécylediméthyle ammonium,

le rapport massique entre (a) ledit tensioactif et (b) lesdits microfibrilles et/ou microcristaux de cellulose variant de 0,1 : 1 à 20 : 1, pour obtenir une dispersion aqueuse colloïdale de microfibrilles et/ou de microcristaux de cellulose,

(2) on élimine l'eau de la dispersion aqueuse telle qu'obtenue à l'étape précédente pour obtenir un mélange sec de tensioactif et de cellulose, ledit mélange contenant de 5% à 95% en poids de tensioactif par rapport au poids total du mélange, et de 5% à 95% en poids de cellulose par rapport au poids total du mélange,

(3) on disperse le mélange tel qu'obtenu à l'étape précédente dans un solvant organique tel que défini à la revendication 4,

jusqu'à l'obtention d'une dispersion de microfibrilles et/ou de microcristaux de cellulose dont le taux d'adsorption massique entre ledit tensioactif et lesdits microfibrilles et/ou de microcristaux de cellulose varie de 0,1 à 20, et notamment de 0,1 à 5.

**12.** Utilisation d'une dispersion selon l'une quelconque des revendications 1 à 9, pour la préparation de gels, de cristaux liquides ou de matériaux comprenant des microfibrilles et/ou des microcristaux de cellulose.

**13.** Solvant organique tel que défini à la revendication 4, épaissi et/ou visqueux, **caractérisé en ce qu'**il comporte :

- des microcristaux et/ou des microfibrilles d'une substance organique fibrillaire choisie dans le groupe constitué par la cellulose, la chitine, les polysaccharides tels que le β 1→3 glucane, le β 1→3 xylane et le β 1→4 mannane, lesdits microcristaux ayant des diamètres de 2 à 50 nm pour des longueurs de l'ordre du micron et lesdites microfibrilles ayant des diamètres de 2 à 50 nm pour des longueurs supérieures à 1 µm,
- un composé possédant une partie hydrophile et une partie hydrophobe choisi dans le groupe constitué par un tensioactif, un polymère stabilisateur, un cotensioactif

ou leurs mélanges, lesdits tensioactif, polymère stabilisateur étant tels que définis à la revendication 6 et ledit cotensioactif étant tel que défini à la revendication 7.

**14.** Mélange sec de tensioactif et/ou de polymère stabilisateur et éventuellement de cotensioactif, et de microcristaux et/ou de microfibrilles d'une substance organique fibrillaire choisie dans le groupe constitué par la cellulose, la chitine, les polysaccharides tels que le β 1→ 3 glucane, le β 1→ 3 xylane et le β 1→ 4 mannane, lesdits microcristaux ayant des diamètres de 2 à 50 nm pour des longueurs de l'ordre du micron et lesdites microfibrilles ayant des diamètres de 2 à 50 nm pour des longueurs supérieures à 1 µm.

**15.** Procédé de préparation d'un mélange sec selon la revendication 14, **caractérisé en ce que**

(1) on mélange une dispersion aqueuse de microfibrilles et/ou de microcristaux d'une substance organique

fibrillaire choisie dans le groupe constitué par la cellulose, la chitine, les polysaccharides tels que le β 1→ 3 glucane, le β 1→ 3 xylane et le β 1→ 4 mannane, avec un composé possédant une partie hydrophile et une partie hydrophobe choisi dans le groupe constitué par un tensioactif, un polymère stabilisateur, un cotensioactif ou leurs mélanges, ledit tensioactif et ledit polymère stabilisateur étant tels que définis à la revendication 6, et ledit cotensioactif étant tel que défini à la revendication 7, lesdits microcristaux ayant des diamètres de 2 à 50 nm pour des longueurs de l'ordre du micron et lesdites microfibrilles ayant des diamètres de 2 à 50 nm pour des longueurs supérieures à 1 μm,

pour obtenir une dispersion aqueuse de microfibrilles et/ou de microcristaux de la susdite substance organique fibrillaire,

(2) on élimine l'eau de la dispersion aqueuse telle qu'obtenue à l'étape précédente pour obtenir le susdit mélange.

**16.** Utilisation d'un mélange sec selon la revendication 14, pour la préparation de matériaux comprenant des microfibrilles et/ou des microcristaux de cellulose.

## Patentansprüche

**1.** Kolloidale Dispersion von Mikrofibrillen und/oder Mikrokristallen einer fibrillären organischen Substanz, die aus der aus Cellulose, Chitin, Polysacchariden wie β-(1→3)-Glucan, β-(1→3)-Xylan und β-(1→4)-Mannan bestehenden Gruppe ausgewählt ist, in einem organischen Lösungsmittel, die außerdem mindestens eine Verbindung enthält, die einen hydrophilen Teil und einen hydrophoben Teil aufweist,
wobei die kolloidale Dispersion einer Dispersion von Feststoffteilchen mit charakteristischen Größen im Bereich von 1 nm bis 1 000 nm entspricht.

**2.** Dispersion nach Anspruch 1, **dadurch gekennzeichnet, dass** die einen hydrophilen Teil und einen hydrophoben Teil aufweisende Verbindung aus der aus einem Tensid, einem stabilisierenden Polymer, einem Co-Tensid oder deren Mischungen bestehenden Gruppe ausgewählt ist, insbesondere einer Mischung von Tensid und Co-Tensid.

**3.** Dispersion nach Anspruch 1 oder 2 von Mikrofibrillen und/oder Mikrokristallen aus Cellulose.

**4.** Dispersion nach einem der Ansprüche 1 bis 3, **dadurch gekennzeichnet, dass** das organische Lösungsmittel eine Dielektrizitätskonstante hat, die kleiner oder gleich 37,5 ist, und/oder dass das organische Lösungsmittel ausgewählt ist aus der Gruppe bestehend aus:

- aliphatischen Kohlenwasserstoffen mit 5 bis 20 Kohlenstoffatomen, insbesondere Pentan, Hexan, Heptan, Octan, Dodecan oder Cyclohexan,
- aromatischen Kohlenwasserstoffen, insbesondere Xylol, Toluol oder Decalin,
- chlorierten Lösungsmitteln, insbesondere Chloroform, Dichlormethan, Tetrachlorkohlenstoff, Dichlorethan,
- Ketonen mit 3 bis 10 Kohlenstoffatomen, insbesondere Aceton oder Methylethylketon,
- polymerisierbaren Vinylverbindungen, insbesondere Alkylmethacrylaten und Alkylacrylaten mit Alkylgruppen mit 1 bis 10 Kohlenstoffatomen, Styrol, Vinylacetat,
- Epoxiden, insbesondere jenen mit einer aliphatischen Kette mit 1 bis 10 Kohlenstoffatomen und/oder einer aromatischen Kette, Diepoxiden, Triepoxiden und/oder Tetraepoxiden,
- primären, sekundären oder tertiären Aminen, insbesondere jenen, die eine aliphatische Kette mit 1 bis 10 Kohlenstoffatomen und/oder eine aromatische Kette aufweisen, Diaminen, Triaminen oder Tetraaminen,
- Alkylacetaten mit Alkylgruppen mit 1 bis 10 Kohlenstoffatomen, insbesondere Methylacetat, Ethylacetat, Propylacetat oder Butylacetat,
- Ethern mit einer Alkylkette mit 1 bis 20 Kohlenstoffatomen oder einer aromatischen Kette, wie Ethylether oder Benzylether,
- Aldehyden, Carbonsäuren und/oder ihren acylierten Derivaten und Anhydriden, Polysäuren, die eine Alkylkette mit 1 bis 20 Kohlenstoffatomen oder eine aromatische Kette aufweisen, wie Acetaldehyd, Essigsäure, Maleinsäureanhydrid, Benzaldehyd,
- primären, sekundären oder tertiären Alkoholen, insbesondere jenen mit einer aliphatischen Kette mit 1 bis 10 Kohlenstoffatomen und/oder einer aromatischen Kette, Polyalkoholen, insbesondere Methanol, Ethanol, Isopropanol, Butanol oder Benzylalkohol,
- Tetrahydrofuran (THF), Pyridin, Dimethylformamid (DMF), Dimethylacetamid (DMAc),
- Mineralölen und/oder organischen Ölen synthetischen oder natürlichen Ursprungs, wie Siliconölen oder Pflanzenölen,

oder Mischungen davon.

**5.** Dispersion nach einem der Ansprüche 1 bis 4, **dadurch gekennzeichnet, dass** die Cellulosemenge von 0,01 bis 50 Gew.-%, bezogen auf das Gesamtgewicht der Dispersion, variiert.

**6.** Dispersion nach einem der Ansprüche 1 bis 5, **dadurch gekennzeichnet, dass** die einen hydrophilen Teil und einen hydrophoben Teil aufweisende Verbindung ist:

(a) ein Tensid mit:

- einem hydrophilen Teil, der an die Mikrofibrillen und/oder Mikrokristalle der Verbindung, die aus der aus Cellulose, Chitin, Polysacchariden wie β-(1→3)-Glucan, β-(1→3)-Xylan und β-(1→4)-Mannan bestehenden Gruppe ausgewählt ist, adsorbieren kann und beispielsweise Oxyethylengruppen enthält,
- einem hydrophoben Teil, der beispielsweise eine Kohlenstoffkette mit mindestens 6 Kohlenstoffatomen aufweist, aromatisch oder nicht aromatisch, und der mit dem Lösungsmittel interagieren kann,
wobei dieses Tensid insbesondere ausgewählt ist aus der Gruppe bestehend aus:

* kationischen Tensiden, beispielsweise aus der Familie der quartären Alkylammonium-Verbindungen mit 1 bis 2 Alkylsubstituenten mit 6 bis 20 Kohlenstoffatomen, wie Didecyldimethylammoniumbromid,
* anionischen Tensiden, beispielsweise aus der Familie der polyoxyalkylenierten Phosphorsäureester von Alkylarylphenol, wobei der Alkylsubstituent 1 bis 12 Kohlenstoffatome hat und 5 bis 25 Oxyalkyleneinheiten mit 1 bis 4 Kohlenstoffatomen, insbesondere Oxyethylen-, Oxypropylen-, Oxybutyleneinheiten, enthalten sind, beispielsweise BNA, eine Mischung von Ester und Diester der Phosphorsäure mit Alkylarylkette, wobei der Alkylsubstituent 9 Kohlenstoffatome hat und 9 Oxyethyleneinheiten enthalten sind,
* amphoteren Tensiden, die eine quartäre Ammoniumgruppe und eine anionische Phosphorsäuregruppe aufweisen, beispielsweise aus der Familie der Phospholipide, wie Lecithin aus Soja oder Ei,
* nichtionischen Tensiden, beispielsweise aus der Familie derjenigen mit einer Sorbiteinheit und einer bis 3 Polyoxyethylenketten, einer bis 3 Fettsäureketten mit 12 bis 30 Kohlenstoffatomen, insbesondere mit 18 Kohlenstoffatomen, wie Polyoxyethylen(20)-sorbitantrioleat,

(b) oder ein stabilisierendes Polymer mit 5 bis 200 hydrophilen Einheiten und 10 bis 200 hydrophoben Einheiten, insbesondere jene mit einem Molekulargewicht unter 20 000, wie die Block-Copolymere Ethylenoxid-Propylenoxid.

**7.** Dispersion nach einem der Ansprüche 1 bis 6, **dadurch gekennzeichnet, dass** das Co-Tensid aufweist:

- einen hydrophilen Teil, der mit dem hydrophilen Teil der einen hydrophilen Teil und einen hydrophoben Teil aufweisenden Verbindung, wie im Anspruch 6 definiert, kompatibel ist, insbesondere mit dem hydrophilen Teil des Tensids oder des stabilisierenden Polymers, wie im Anspruch 6 definiert,
- einen hydrophoben Teil, der mit dem hydrophoben Teil der einen hydrophilen Teil und einen hydrophoben Teil aufweisenden Verbindung, wie im Anspruch 6 definiert, kompatibel ist, insbesondere mit dem hydrophoben Teil des Tensids oder des stabilisierenden Polymers wie oben definiert,

wobei das Co-Tensid im Übrigen ermöglicht, dass die Mikrofibrillen und/oder Mikrokristalle der fibrillären organischen Substanz, wie sie im Anspruch 1 definiert ist, mit dem organischen Lösungsmittel kompatibel ist,
wobei das Co-Tensid insbesondere ausgewählt ist aus der Gruppe bestehend aus Alkoholen mit 4 bis 18 Kohlenstoffatomen, Carbonsäuren mit 4 bis 18 Kohlenstoffatomen, Aldehyden mit 4 bis 18 Kohlenstoffatomen oder Aminen mit 4 bis 18 Kohlenstoffatomen.

**8.** Dispersion nach einem der Ansprüche 1 bis 7, **dadurch gekennzeichnet, dass** sie enthält:

- Mikrofibrillen und/oder Mikrokristalle aus Cellulose in einer Menge von 0,01 bis 50 Gew.-%, bezogen auf das Gesamtgewicht der Dispersion, insbesondere von 0,1 bis 30 Gew.-%,
- ein organisches Lösungsmittel, wie im Anspruch 4 definiert, in einer Menge von 50 bis 99,9 Gew.-%, bezogen auf das Gesamtgewicht der Dispersion,

- ein Tensid, wie im Anspruch 6 definiert, in einer Menge von 0,01 bis 50 Gew.-%, bezogen auf das Gesamtgewicht der Dispersion,
- und gegebenenfalls ein Co-Tensid, wie im Anspruch 7 definiert, in einer Menge von 0 bis 20 Gew.-%, bezogen auf das Gesamtgewicht der Dispersion.

**9.** Dispersion nach einem der Ansprüche 1 bis 8, **dadurch gekennzeichnet, dass** sie mindestens eine der folgenden Eigenschaften zeigt:

- sie bildet keine Aggregate (sie ist nicht ausflockend),
- sie ist bei Scherung doppelbrechend,
- sie ist über einen Zeitraum im Bereich von mindestens einer Minute bis mindestens 12 Monaten stabil.

**10.** Verfahren zur Herstellung einer Dispersion nach einem der Ansprüche 1 bis 9, **gekennzeichnet durch**:

(1) Mischen einer wässrigen Dispersion von Mikrofibrillen und/oder Mikrokristallen einer fibrillären organischen Substanz, die aus der aus Cellulose, Chitin, Polysacchariden wie β-(1→3)-Glucan, β-(1→3)-Xylan und β-(1→4)-Mannan bestehenden Gruppe ausgewählt ist, mit einer einen hydrophilen Teil und einen hydrophoben Teil aufweisenden Verbindung, die aus der aus einem Tensid, einem stabilisierenden Polymer, einem Co-Tensid oder deren Mischungen bestehenden Gruppe ausgewählt ist, wobei das Tensid und das stabilisierende Polymer wie im Anspruch 6 definiert sind und das Co-Tensid wie im Anspruch 7 definiert ist,

um eine wässrige Dispersion der Mikrofibrillen und/oder Mikrokristalle der genannten fibrillären organischen Substanz zu erhalten,

(2) Entfernen des Wassers aus der im vorherigen Schritt erhaltenen wässrigen Dispersion, um eine Trockenmischung von Tensid und/oder stabilisierendem Polymer und gegebenenfalls Co-Tensid mit einer fibrillären organischen Substanz, die aus der aus Cellulose, Chitin, Polysacchariden wie β-(1→3)-Glucan, β-(1→3)-Xylan und β-(1→4)-Mannan bestehenden Gruppe ausgewählt ist, zu erhalten,

(3) Dispergieren der im vorherigen Schritt erhaltenen Mischung in einem organischen Lösungsmittel, bis eine Dispersion erhalten ist.

**11.** Herstellungsverfahren nach Anspruch 10, **gekennzeichnet durch**:

(1) Mischen einer wässrigen Dispersion von Mikrofibrillen und/oder Mikrokristallen aus Cellulose mit einem Tensid, ausgewählt aus der Gruppe bestehend aus BNA, Polyoxyethylensorbitantrioleat oder Didecyldimethylammoniumbromid,

wobei das Massenverhältnis zwischen (a) dem Tensid und (b) den Mikrofibrillen und/oder Mikrokristallen aus Cellulose von 0,1:1 bis 20:1 variiert, um eine kolloidale wässrige Dispersion von Mikrofibrillen und/oder Mikrokristallen aus Cellulose, zu erhalten,

(2) Entfernen des Wassers aus der im vorherigen Schritt erhaltenen wässrigen Dispersion, um eine Trockenmischung von Tensid und Cellulose zu erhalten, wobei die Mischung 5 bis 95 Gew.-% Tensid, bezogen auf das Gesamtgewicht der Mischung, und 5 bis 95 Gew.-% Cellulose, bezogen auf das Gesamtgewicht der Mischung, enthält,

(3) Dispergieren der im vorherigen Schritt erhaltenen Mischung in einem organischen Lösungsmittel wie im Anspruch 4 definiert,

bis eine Dispersion von Mikrofibrillen und/oder Mikrokristallen von Cellulose erhalten ist, deren massebezogenes Adsorptionsverhältnis zwischen dem Tensid und den Mikrofibrillen und/oder Mikrokristallen aus Cellulose von 0,1 bis 20, insbesondere 0,1 bis 5, variiert.

**12.** Verwendung einer Dispersion nach einem der Ansprüche 1 bis 9 zur Herstellung von Gelen, flüssigen Kristallen oder Materialien, die Mikrofibrillen und/oder Mikrokristalle aus Cellulose enthalten.

**13.** Organisches Lösungsmittel, wie es im Anspruch 4 definiert ist, verdickt und/oder viskos, **dadurch gekennzeichnet, dass** es aufweist:

- Mikrokristalle und/oder Mikrofibrillen einer fibrillären organischen Substanz, ausgewählt aus der Gruppe bestehend aus Cellulose, Chitin, Polysacchariden wie β-(1→3)-Glucan, β-(1→3)-Xylan und β-(1→4)-Mannan, wobei diese Mikrokristalle Durchmesser von 2 bis 50 nm bei einer Länge in der Größenordnung von einem Mikron und die Mikrofibrillen Durchmesser von 2 bis 50 nm bei einer Länge von mehr als 1 μm haben,
- eine einen hydrophilen Teil und einen hydrophoben Teil aufweisende Verbindung, ausgewählt aus der Gruppe

bestehend aus Tensid, stabilisierendem Polymer, Co-Tensid oder deren Mischungen, wobei das Tensid, das stabilisierende Polymer wie im Anspruch 6 definiert sind und das Co-Tensid wie im Anspruch 7 definiert ist.

**14.** Trockenmischung von Tensid und/oder stabilisierendem Polymer und gegebenenfalls Co-Tensid mit Mikrokristallen und/oder Mikrofibrillen einer fibrillären organischen Substanz, die aus der aus Cellulose, Chitin, Polysacchariden wie β-(1→3)-Glucan, β-(1→3)-Xylan und β-(1→4)-Mannan bestehenden Gruppe ausgewählt ist, wobei die Mikrokristalle Durchmesser von 2 bis 50 nm bei einer Länge in der Größenordnung von einem Mikron und die Mikrofibrillen Durchmesser von 2 bis 50 nm bei einer Länge von mehr als 1 μm haben.

**15.** Verfahren zur Herstellung einer Trockenmischung nach Anspruch 14, **gekennzeichnet durch**:

(1) Mischen einer wässrigen Dispersion von Mikrofibrillen und/oder Mikrokristallen einer fibrillären organischen Substanz, die aus der aus Cellulose, Chitin, Polysacchariden wie β-(1→3)-Glucan, β-(1→3)-Xylan und β-(1→4) -Mannan bestehenden Gruppe ausgewählt ist, mit einer einen hydrophilen Teil und einen hydrophoben Teil aufweisenden Verbindung, die aus der aus Tensid, stabilisierendem Polymer, Co-tensid oder deren Mischungen bestehenden Gruppe ausgewählt, wobei das Tensid und das stabilisierende Polymer wie im Anspruch 6 definiert sind und das Co-Tensid wie im Anspruch 7 definiert ist, wobei die Mikrokristalle Durchmesser von 2 bis 50 nm bei einer Länge in der Größenordnung von einem Mikron und die Mikrofibrillen Durchmesser von 2 bis 50 nm bei einer Länge von mehr als 1 μm haben,
um eine wässrige Dispersion von Mikrofibrillen und/oder Mikrokristallen der fibrillären organischen Substanz zu erhalten,
(2) Entfernen des Wassers aus der im vorherigen Schritt erhaltenen wässrigen Dispersion, um die Mischung zu erhalten.

**16.** Verwendung einer Trockenmischung nach Anspruch 14 zur Hertellung von Materialien, die Mikrokristallen und/ oder Mikrokristalle aus Cellulose enthalten.

## Claims

**1.** A colloidal dispersion, in an organic solvent, of microfibrils and/or microcrystals of a fibrillar organic substance selected from the group comprising cellulose, chitin, and polysaccharides such as β 1 → 3 glucan, β 1 → 3 xylan and β 1 → 4 mannan, containing in addition at least one compound possessing a hydrophilic part and a hydrophobic part, said colloidal dispersion corresponding to a dispersion of solid particles with characteristic sizes from 1 nm to 1,000 nm.

**2.** The dispersion according to claim 1, **characterized in that** the compound possessing a hydrophilic part and a hydrophobic part is selected from the group comprising a surfactant, a stabilizing polymer, a co-surfactant or mixtures thereof, and especially a mixture of surfactant and co-surfactant.

**3.** The dispersion according to claim 1 or claim 2 of microfibrils and/or microcrystals of cellulose.

**4.** The dispersion according to any one of the claims 1 to 3, **characterized in that** the organic solvent has a dielectric constant that is less than or equal to 37.5, and/or **in that** the organic solvent is selected from the group comprising:

- aliphatic hydrocarbons having from 5 to 20 carbon atoms, especially pentane, hexane, heptane, octane, dodecane or cyclohexane,
- aromatic hydrocarbons, especially xylene, toluene or decalin,
- chlorine-containing solvents, especially chloroform, dichloromethane, carbon tetrachloride, dichloroethane,
- ketones having from 3 to 10 carbon atoms, especially acetone or methyl ethyl ketone,
- polymerizable vinylic compounds, especially methacrylates and acrylates of alkyls having from 1 to 10 carbon atoms, styrene, vinyl acetate,
- epoxides, especially those with an aliphatic chain having from 1 to 10 carbon atoms, and/or an aromatic chain, the diepoxides, the triepoxides and/or the tetraepoxides,
- primary, secondary or tertiary amines, especially those with an aliphatic chain having from 1 to 10 carbon atoms and/or an aromatic chain, the diamines, triamines or tetramines,
- alkyl acetates having from 1 to 10 carbon atoms, especially methyl, ethyl, propyl or butyl acetates,
- ethers with an alkyl chain having from 1 to 20 carbon atoms or an aromatic chain such as ethyl ether, or benzyl

ether,

- aldehydes, carboxylic acids and/or their acylated derivatives and anhydrides, the polyacids, with an alkyl chain having from 1 to 20 carbon atoms or an aromatic chain such as acetaldehyde, acetic acid, maleic anhydride, benzaldehyde,
- primary, secondary or tertiary alcohols, especially those with an aliphatic chain having from 1 to 10 carbon atoms, and/or an aromatic chain, the polyalcohols, especially methanol, ethanol, isopropanol, butanol or benzyl alcohol,
- tetrahydrofuran (THF), pyridine, dimethylformamide (DMF), dimethylacetamide (DMAc),
- mineral and/or organic oils, of synthetic or natural origin, such as silicone oils or vegetable oils,

or mixtures thereof.

5. The dispersion according to any one of the claims 1 to 4, **characterized in that** the quantity of cellulose varies from 0.01 wt.% to 50 wt.% relative to the total weight of the dispersion.

6. The dispersion according to any one of the claims 1 to 5, **characterized in that** the compound possessing a hydrophilic part and a hydrophobic part is:

(a) a surfactant possessing:

- a hydrophilic part, which is capable of being adsorbed on the microfibrils and/or microcrystals of the compound selected from the group comprising cellulose, chitin, and polysaccharides such as $\beta$ 1 $\rightarrow$ 3 glucan, $\beta$ 1 $\rightarrow$ 3 xylan and $\beta$ 1 $\rightarrow$ 4 mannan, and containing for example oxyethylene groups,
- a hydrophobic part, containing for example a carbon chain having at least 6 carbon atoms, aromatic or non-aromatic, and capable of interacting with the solvent,

the said surfactant being selected in particular from the group comprising:

* cationic surfactants, for example from the family of the quaternary ammonium alkyls containing from 1 to 2 alkyl substituents, having from 6 to 20 carbon atoms, such as didecyldimethyl ammonium bromide,
* anionic surfactants, for example from the family of the polyoxyalkylenated alkarylphenol phosphoric esters, in which the alkyl substituent contains from 1 to 12 carbon atoms, and from 5 to 25 oxyalkylene units having from 1 to 4 carbon atoms, and especially oxyethylene, oxypropylene or oxybutylene units, for example BNA, a mixture of ester and diester of phosphoric acid with an alkaryl chain, in which the alkyl substituent contains 9 carbon atoms and 9 oxyethylene units,
* amphoteric surfactants possessing a quaternary ammonium group and an anionic phosphoric group, for example from the family of the phospholipids, such as egg or soya lecithin,
* neutral surfactants, for example from the family of those containing a sorbitol unit, and one to 3 polyoxyethylene chains, one to 3 fatty chains having from 12 to 30 carbon atoms, and especially 18 carbon atoms, such as polyoxyethylene (20) sorbitan trioleate,

(b) or, a stabilizing polymer possessing from 5 to 200 hydrophilic units and from 10 to 200 hydrophobic units, especially those with a molecular weight below 20000, such as ethylene oxide-propylene oxide block copolymers.

7. The dispersion according to any one of the claims 1 to 6, **characterized in that** the co-surfactant possesses:

- a hydrophilic part that is compatible with the hydrophilic part of the compound possessing a hydrophilic part and a hydrophobic part as defined in claim 6, and especially with the hydrophilic part of the surfactant or of the stabilizing polymer as defined in claim 6,
- a hydrophobic part that is compatible with the hydrophobic part of the compound possessing a hydrophilic part and a hydrophobic part as defined in claim 6, and especially with the hydrophobic part of the surfactant or of the stabilizing polymer as defined above,

the co-surfactant making it possible, moreover, for the microfibrils and/or microcrystals of the fibrillar organic substance as defined in claim 1 to be rendered compatible with the organic solvent,

the said co-surfactant being selected in particular from the group comprising alcohols having from 4 to 18 carbon atoms, carboxylic acids having from 4 to 18 carbon atoms, aldehydes having from 4 to 18 carbon atoms or amines having from 4 to 18 carbon atoms.

**8.** The dispersion according to any one of the claims 1 to 7, **characterized in that** it contains:

- cellulose microfibrils and/or microcrystals, in a quantity varying from 0.01 wt.% to 50 wt.% relative to the total weight of the dispersion, and especially from 0.1 wt.% to 30 wt.%,
- an organic solvent as defined in claim 4, in a quantity varying from 50 wt.% to 99.9 wt.% relative to the total weight of the dispersion,
- a surfactant as defined in claim 6, in a quantity varying from 0.01 wt.% to 50 wt.% relative to the total weight of the dispersion,
- and if necessary a co-surfactant as defined in claim 7, in a quantity varying from 0 wt.% to 20 wt.% relative to the total weight of the dispersion.

**9.** The dispersion according to any one of the claims 1 to 8, **characterized in that** it exhibits at least one of the following properties:

- it does not form aggregates (it is non-flocculent),
- it is birefringent in shear,
- it is stable for periods ranging from at least one minute to at least 12 months.

**10.** A method of preparation of a dispersion according to any one of the claims 1 to 9, **characterized in that**:

(1) an aqueous dispersion of microfibrils and/or microcrystals of a fibrillar organic substance selected from the group comprising cellulose, chitin, and polysaccharides such as β 1 → 3 glucan, β 1 → 3 xylan and β 1 → 4 mannan, is mixed with a compound possessing a hydrophilic part and a hydrophobic part selected from the group comprising a surfactant, a stabilizing polymer, a co-surfactant or mixtures thereof, the said surfactant and the said stabilizing polymer being as defined in claim 6, and the said co-surfactant being as defined in claim 7,

to obtain an aqueous dispersion of microfibrils and/or of microcrystals of the aforesaid fibrillar organic substance,

(2) the water is eliminated from the aqueous dispersion as obtained in the preceding stage to obtain a dry mixture of surfactant and/or of stabilizing polymer and possibly of co-surfactant, and a fibrillar organic substance selected from the group comprising cellulose, chitin, and polysaccharides such as β 1 → 3 glucan, β 1 → 3 xylan and β 1 → 4 mannan,

(3) the mixture as obtained in the preceding stage is dispersed in an organic solvent until a dispersion is obtained.

**11.** A method of preparation according to claim 10, **characterized in that**:

(1) an aqueous dispersion of microfibrils and/or of microcrystals of cellulose is mixed with a surfactant selected from the group comprising BNA, polyoxyethylene sorbitan trioleate or didecyldimethyl ammonium bromide,

the weight ratio between (a) the said surfactant and (b) the said microfibrils and/or microcrystals of cellulose varying from 0.1:1 to 20:1, to obtain an aqueous colloidal dispersion of microfibrils and/or of microcrystals of cellulose,

(2) the water is eliminated from the aqueous dispersion as obtained in the preceding stage to obtain a dry mixture of surfactant and cellulose, the said mixture containing from 5 wt.% to 95 wt.% of surfactant relative to the total weight of the mixture, and from 5 wt.% to 95 wt.% of cellulose relative to the total weight of the mixture,

(3) the mixture as obtained in the preceding stage is dispersed in an organic solvent as defined in claim 4,

until a dispersion of cellulose microfibrils and/or microcrystals is obtained for which the percentage by weight of adsorption between the said surfactant and the said cellulose microfibrils and/or microcrystals varies from 0.1 to 20, and especially from 0.1 to 5.

**12.** The use of a dispersion according to any one of the claims 1 to 9, for the preparation of gels, liquid crystals or materials containing cellulose microfibrils and/or microcrystals.

**13.** An organic solvent as defined in claim 4, thickened and/or viscous, **characterized in that** it contains:

- microcrystals and/or microfibrils of a fibrillar organic substance selected from the group comprising cellulose,

chitin, and polysaccharides such as β 1 → 3 glucan, β 1 → 3 xylan and β 1 → 4 mannan, said microcrystals having diameters from 2 to 50 nm and lengths of the order of a micron, and said microfibrils having diameters from 2 to 50 nm and lengths greater than 1 μm,

- a compound possessing a hydrophilic part and a hydrophobic part selected from the group comprising a surfactant, a stabilizing polymer, a co-surfactant or their mixtures, the said surfactant, and stabilizing polymer being as defined in claim 6 and the said co-surfactant being as defined in claim 7.

**14.** A dry mixture of surfactant and/or of stabilizing polymer and possibly of co-surfactant, and of microcrystals and/or microfibrils of a fibrillar organic substance selected from the group comprising cellulose, chitin, and polysaccharides such as β 1→3 glucan, β 1→3 xylan and β 1→4 mannan, said microcrystals having diameters from 2 to 50 nm and lengths of the order of a micron, and said microfibrils having diameters from 2 to 50 nm and lengths greater than 1 μm.

**15.** A method of preparation of a dry mixture according to claim 14, **characterized in that**

(1) an aqueous dispersion of microfibrils and/or microcrystals of a fibrillar organic substance selected from the group comprising cellulose, chitin, and polysaccharides such as β 1 → 3 glucan, β 1 → 3 xylan and β 1 → 4 mannan, is mixed with a compound possessing a hydrophilic part and a hydrophobic part selected from the group comprising a surfactant, a stabilizing polymer, a co-surfactant or mixtures thereof, the said surfactant and the said stabilizing polymer being as defined in claim 6, and the said co-surfactant being as defined in claim 7, said microcrystals having diameters from 2 to 50 nm and lengths of the order of a micron, and said microfibrils having diameters from 2 to 50 nm and lengths greater than 1 μm,

to obtain an aqueous dispersion of microfibrils and/or microcrystals of the aforesaid fibrillar organic substance,

(2) the water is eliminated from the aqueous dispersion as obtained in the preceding stage to obtain the aforesaid mixture.

**16.** The use of a dry mixture according to claim 14, for the preparation of materials containing microfibrils and/or microcrystals of cellulose.

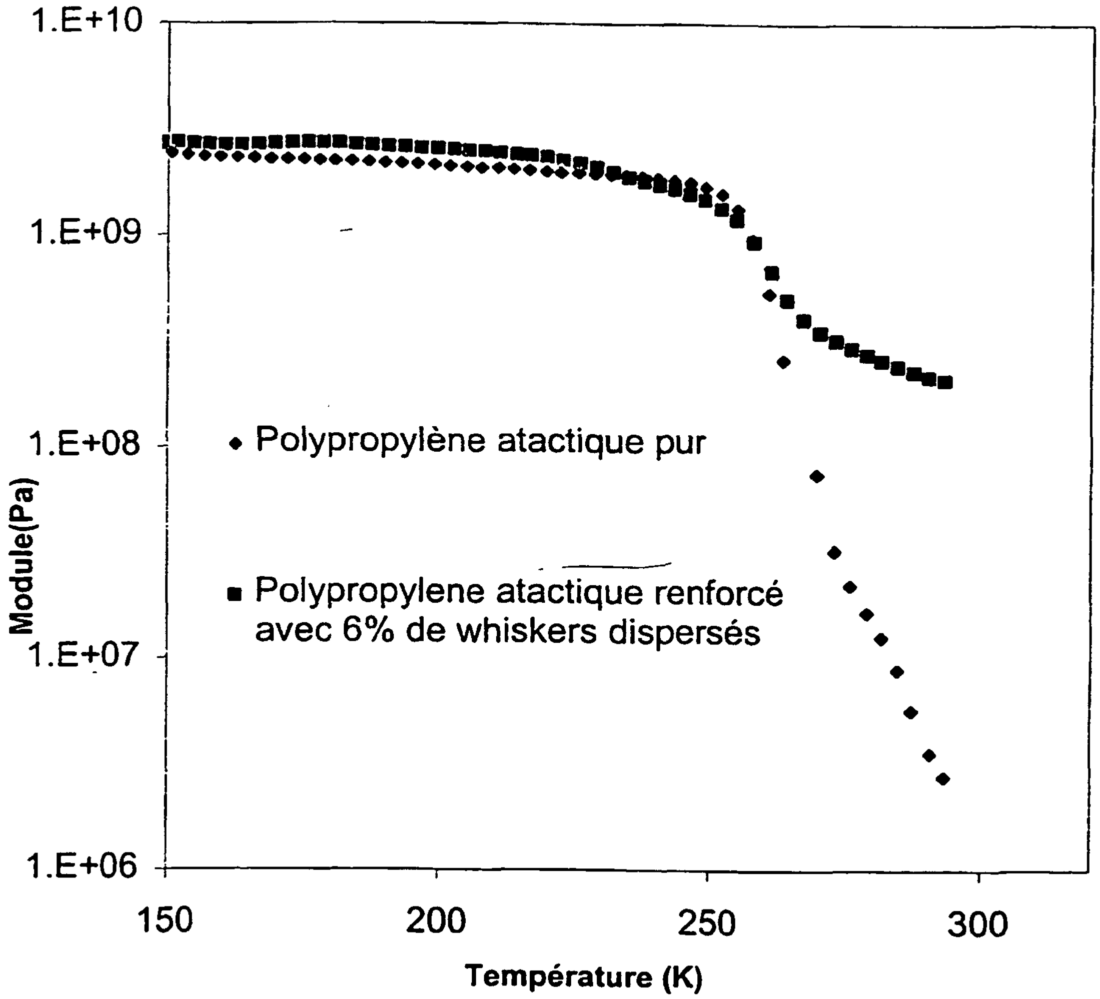
1.E+10
1.E+09
1.E+08
1.E+07
1.E+06
Module(Pa)
150
200
250
300
Température (K)
Polypropylène atactique pur
Polypropylene atactique renforcé avec 6% de whiskers dispersés

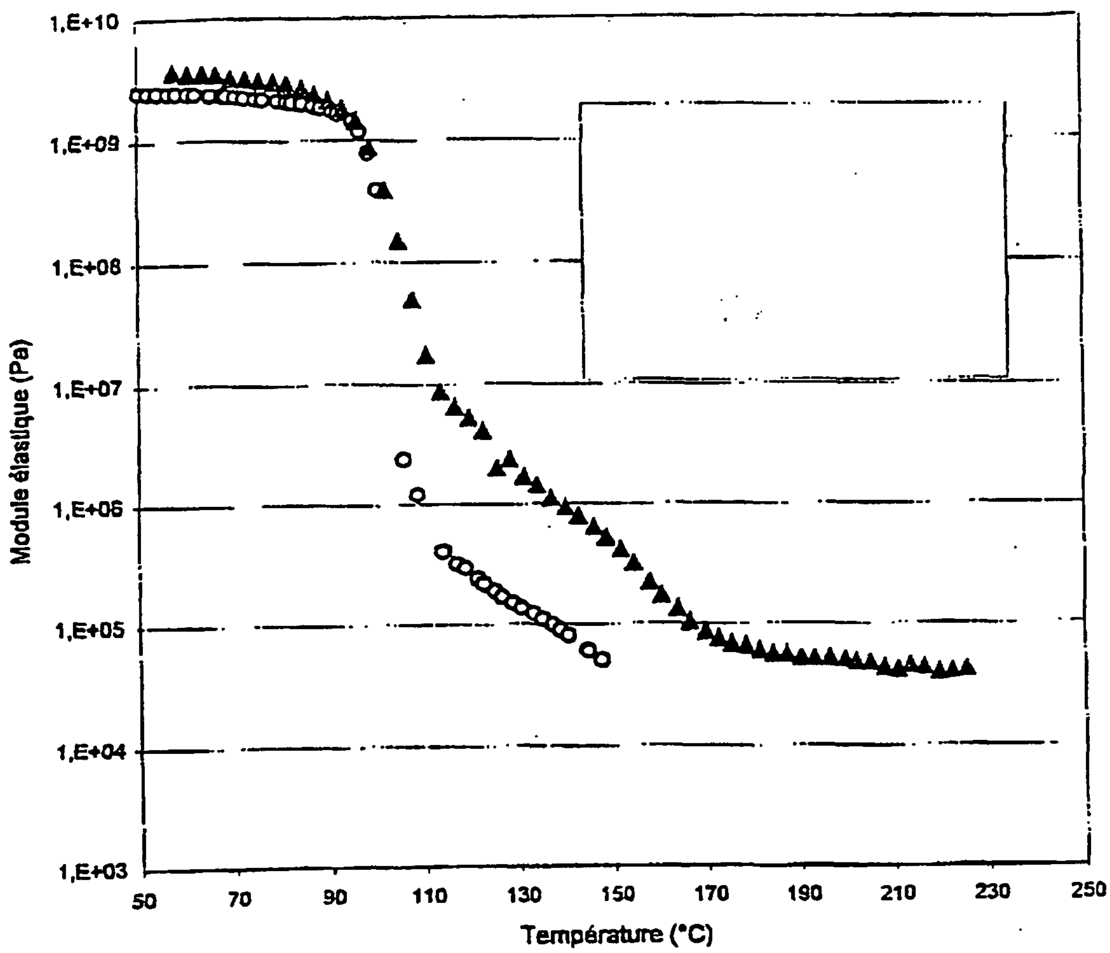
1,E+10
1,E+09
1,E+08
1,E+07
1,E+06
1,E+05
1,E+04
1,E+03
Module élastique (Pa)
50
70
90
110
130
150
170
190
210
230
250
Température (°C)